# EUROPEAN PATENT APPLICATION

(11) **EP 4 325 359 A1**
(43) Date of publication of application: **21.02.2024**
(21) Application number: 21936929.5
(22) Date of filing: 13.04.2021
(51) Int. Cl.: G06F 9/50

(54) **INFORMATION PROCESSING SYSTEM, INFORMATION PROCESSING DEVICE, SERVER DEVICE, PROGRAM, RECONFIGURABLE DEVICE, AND METHOD**

(71) Applicant: Chiptip Technology Kabushiki Kaisha, Tokyo 107-0052 (JP)
(72) Inventor: FUKUDA Eric Shun, Tokyo 107-0052 (JP)
(74) Representative: Betten & Resch
(86) International application number: PCT/JP2021/015354
(87) International publication number: WO 2022/219727

(57) **Abstract**

[Problems]

To utilize a reconfigurable device more appropriately.

[Solution]

A system comprising an acquisition unit for acquiring information indicating a first resource from a user; an identification unit for identifying a first reconfigurable device corresponding to information indicating the first resource; and an instruction unit for instructing to write a first partition shell corresponding to information indicating the first resource on the first reconfigurable device. Also, the acquisition unit acquires information indicating a second resource which is not the same as the information indicating the first resource, and the instruction unit instructs to write a second partition shell different from the first partition shell, corresponding to information indicating the second resource, on the first reconfigurable device.

## Description

### Technical Field

The technology disclosed in this application relates to an information processing system, an information processing apparatus, a server device, a reconfigurable device, a program, or a method.

### Background of the invention

Recently, circuit modifiable programmable logic devices have begun to be introduced in various fields.

### Citation List

### Patent Literature

Patent Literature 1: Japanese Patent Application Laid-Open Publication No. 2020-135318
Patent Literature 2: Japanese Patent Application Laid-Open Publication No. 2010-251925
Patent Literature 3: Japanese Patent Application Laid-Open Publication No. H7-6080

### Summary of Invention

### Technical Problem

However, there are situations in which the technology of using reconfigurable devices for distributed processing is not utilized. Accordingly, various embodiments of the present invention provide an information processing system, an information processing apparatus, a server device, a program, a reconfigurable device, or a method for solving the above problems.

### Solution to Problem

One embodiment according to the present application is:
a system comprising
an acquisition unit for acquiring information indicating a first resource from a user;
an identification unit for identifying a first reconfigurable device corresponding to information indicating the first resource; and
an instruction unit for instructing to write a first partition shell corresponding to information indicating the first resource on the first reconfigurable device.

Another embodiment according to the present invention is:
a method performed by a system, comprising
a step for acquiring information indicating a first resource from a user;
a step for identifying a first reconfigurable device corresponding to information indicating the first resource; and
a step for instructing to write a first partition shell corresponding to information indicating the first resource on the first reconfigurable device.

Another embodiment according to the present invention is:
a computer program to operate a system comprising with
means for acquiring information indicating a first resource from a user;
means for identifying a first reconfigurable device corresponding to information indicating the first resource;
a means for instructing to write a first partition shell corresponding to information indicating the first resource on the first reconfigurable device.

### Advantageous Effect of Invention

According to one embodiment of the present invention, a reconfigurable device can be more appropriately utilized.

### Brief Description of Drawings

FIG. 1 is an example block diagram showing a relationship between a system according to one embodiment and a reconfigurable device.
FIG. 2 is an example block diagram illustrating a relationship between a system according to one embodiment and a reconfigurable device.
FIG. 3 is a block diagram illustrating the functions of a system according to one embodiment.
FIG. 4 is a diagram illustrating a flow of processing of an example of a system according to an embodiment.
FIG. 5 is a diagram illustrating an example data format of a system according to an embodiment.
FIG. 6 is a diagram illustrating an example data format of a system according to an embodiment.
FIG. 7 is a diagram illustrating an example data format of a system according to an embodiment.
FIG. 8 is a diagram illustrating a flow of processing of an example of a system according to an embodiment.
FIG. 9 is a diagram illustrating an example data format of a system according to an embodiment.
FIG. 10 is a block diagram illustrating the functions of a system according to one embodiment.
FIG. 11 is a block diagram illustrating the functions of a system according to one embodiment.
FIG. 12 illustrates a portion of the processing of an example system according to an embodiment.
FIG. 13 illustrates a portion of the processing of an example system according to an embodiment.
FIG. 14 illustrates a portion of the processing of an example system according to an embodiment.
FIG. 15 illustrates a portion of the processing of an example system according to an embodiment.
FIG. 16 illustrates a portion of the processing of an example system according to an embodiment.
FIG. 17 illustrates a portion of the processing of an example system according to an embodiment.
FIG. 18 illustrates a portion of the processing of an example system according to an embodiment.
FIG. 19 illustrates a portion of the processing of an example system according to an embodiment.
FIG. 20 illustrates a portion of the processing of an example system according to an embodiment.
FIG. 21 illustrates a portion of the processing of an example system according to an embodiment.
FIG. 22 is a block diagram illustrating the functions of a system according to one embodiment.
FIG. 23 is a diagram illustrating the flow of an example process of a system according to an embodiment.
FIG. 24 is a block diagram illustrating an example configuration of a system according to one embodiment.

### 1. Summary

An example of the technology disclosed herein relates to rewritable circuits. However, as an example of the present technology, an information processing apparatus including a non-rewritable circuit may be used. Rewritable circuits are also referred to as programmable logic devices, but in the present document, they are referred to as reconfigurable logic devices. On the other hand, the non-rewritable circuit is sometimes referred to as an instruction decoding system, a Neumann type device, etc., and in this document, it is referred to as a Program Variable Device.

Examples of reconfigurable devices include Programmable Array Logic (PAL), Programmable Logic Array (PLA), Generic Array Logic (GAL), Complex Programmable Logic Device (CPLD), Field Programmable Gate Array (FPGA), and Coarse-Grained Reconfigurable Array (CGRA).

In the following description of the present document, FPGAs are mainly used as reconfigurable devices, but it is needless to say that they can be applied to other reconfigurable devices instead of FPGAs. In particular, as the reconfigurable device, partial reconfiguration, that is, a function capable of writing a plurality of regions (For example, the PR region) in one programmable logic device independently of each other, may be capable of processing for each region described below. Here, writing independently of each other may include a function that allows writing to other areas in the programmable logic device that are different from the one area while processing is being executed in one area in the programmable logic device.

In this document, the term information processing apparatus is used as a term of a higher concept of a reconfigurable device and a program variable device.

In addition, although the following first to fourth systems are independent of each other, in the following description of the second to fourth systems, explanation of the same terms as the first system is omitted unless there are circumstances specific to each system.

### 2 Example of the First System

The system of this example relates to a system that provides a user with hardware resources in which a hypervisor shell and a partition shell including a communication function are written before writing of an application by the user. Such a system has the advantage of properly providing the hardware resources of the reconfigurable device to the user

The system of the present example may comprise of one or more information processing devices. Such one or more information processing devices may comprise of one or more FPGAs and/or one or more program variable devices.

The system of this example may also be connected to one or more FPGAs. In this case, there is an advantage of managing one or more FPGAs.

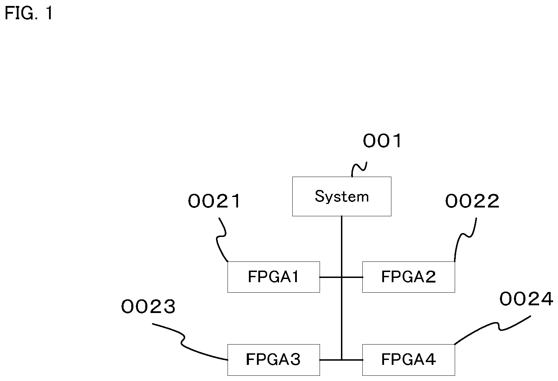

FIG. 1 shows an example in which the system of this example is connected to one or more FPGAs. The system (001) of this example is connected to FPGA 1 (0021) to FPGA 4 (0024). Such connections may be connected by Ethernet or, for example, by a bus such as PCIExpress. It should be noted that the system of this example may be connected to only one or more FPGAs as an arithmetic function for executing a user's application. In this case, the hardware resource for executing a function other than the arithmetic function for executing the user's application may be connected to the program variable device.

The system of the present example may also be connected to one or more FPGAs and further connected to one or more program variable devices. In this case, in addition to managing the FPGA, the system of this example has the advantage of managing the distributed processing including the program variable devices.

Where the system of this example is connected to one or more FPGAs and/or one or more program variable devices, the connections may be connected directly or indirectly through a network. The FPGA or FPGAs may be located in the same facility or may be located in different facilities as the system of this example. In addition, the specific location of the installation of one or more FPGAs may be any locations. For example, one or more FPGAs may be installed in a building (indoors) or outside the building (outdoors). IoT devices such as sensors may operate in and/or outside the building and may be implemented by FPGAs. The network may be wired, wireless, or a mixture of the two.

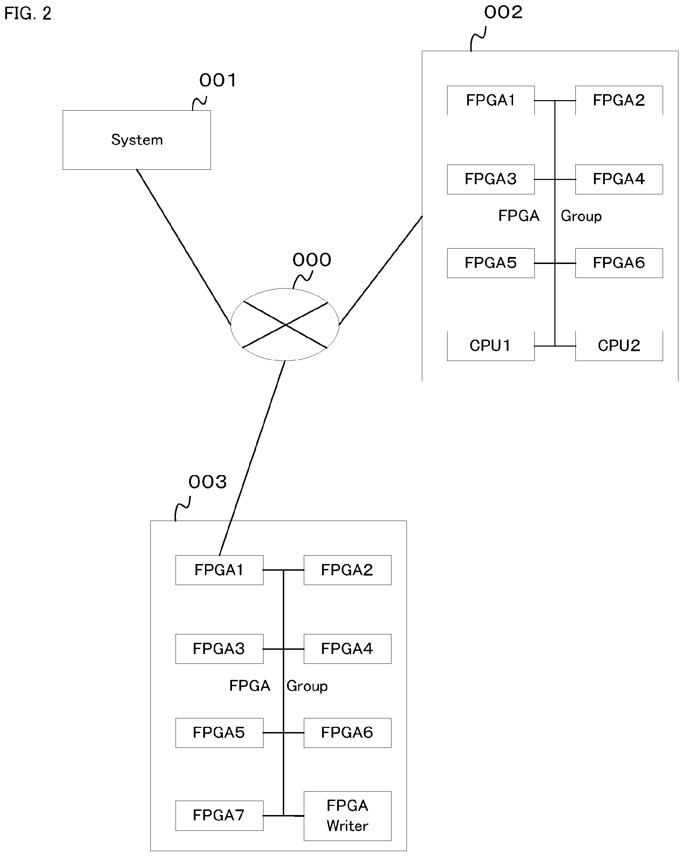

FIG. 2 shows a situation in which the system of the present example is connected via a network (000) with FPGAs and program variable devices. In this figure, the FPGA group (002) includes a plurality of FPGAs and program variable devices. Here, CPU1 and CPU2 are described as indicating program variable devices, and they are also shown as part of the FPGA group for convenience. The FPGA group (003) includes an information processing apparatus including functions of a plurality of FPGAs and an FPGA writer. The FPGA writer may be able to write both a bitstream to the FPGA group (003) and a bitstream to the FPGA group (002). The networks in the FPGA groups (002) and (003) may be buses, Ethernet, or the like.

It should be noted that the system of the present example, the one or more FPGA(s) described above, and/or the one or more program variable device(s) described above may be an information processing apparatus on a cloud.

### 2.1. System Function

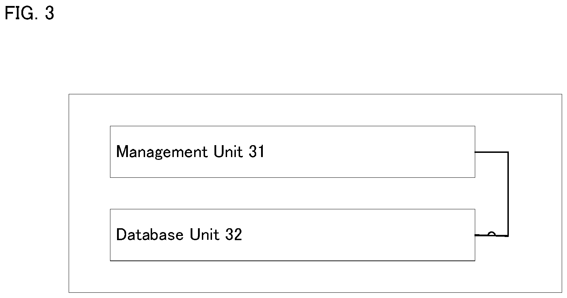

The system of this example may include a database unit including FPGA information, and a management unit for managing information in the database unit. FIG. 3 illustrates an example of such functions.

### 2.1.1. Management Unit

The management unit has a function of managing the processing. The processing may include, for example, a function for providing information, a function for accepting information, a function for transmitting information, and/or a function for receiving information. The information to be provided, accepted, transmitted, and received may be the same or different from each other.

For example, the management unit may have a function of providing information to the user. In this case, the system of this example has the advantage of providing information to the user and enabling the user to make meaningful decisions. The management unit may have a function of accepting information inputted by the user. In this case, the system of this example has the advantage of using information accepted from the user. The management unit may also have a function of transmitting information to the FPGA. In this case, the system of this example has the advantage that the information transmitted to the FPGA can affect the FPGA. The management unit may have a function of receiving information from the FPGA. In this case, the system of this example has the advantage of being able to manage the status of the FPGA by the information received from the FPGA. These details will be described later.

### 2.1.2. Database Unit

The database unit has a function of storing information about the FPGA. In particular, the database may store one or more resource information, which will be described later. The database unit may store other information. Since the system of this example includes a database unit, it is advantageous to be able to use the information of the FPGA managed by the system of this example.

### 2.2. Processing Flow

An example of this system will be described in two stages: the preparatory stage and the operational stage. The preparatory stage may be that which occurs when a new FPGA is connected to the system. In such a case, for example, an FPGA is added or an installed FPGA is changed. When the installed FPGA is changed, the configuration in the installed FPGA may be changed. The operational stage may be that for which the preparatory stage has been completed.

### 2.2.1. Preparatory Stage

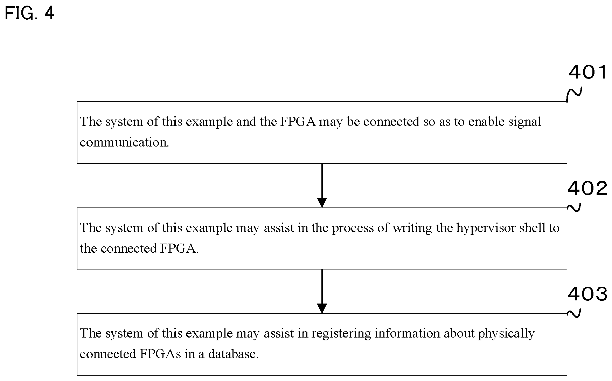

The preparation stage will be described with reference to FIG. 4.

### Step 1

First, the system of this example and the FPGA may be connected so as to enable signal communication. Such connections may be wired or wireless to enable signal communication.

Such connections include, but are not limited to, cases where a new FPGA is installed, cases where a physical configuration of the FPGA is changed by repair, etc.

The connection may also include network connection between the FPGAs and network connection between the FPGAs and information processing apparatus including other CPUs.

### Step 2

The system of this example may assist in the process of writing the hypervisor shell to the connected FPGA. The writing technique for the FPGA itself may utilize known techniques.

The writing of the hypervisor shell may be performed automatically by the system of this example or manually.

The hypervisor shell may be written in any programming languages. When it is written, the hypervisor shell may be converted to a bit stream and written to the FPGA using known techniques. The means of writing may be, for example, technology via JTAG or USB.

The written hypervisor shell may correspond to the type and function of the target FPGA.

The hypervisor shell may be something to provide the FPGA with a communication function with the management unit by written to the FPGA, and does not need to have all the functions of the hypervisor shell described below. By writing the hypervisor shell in this step, the system of this example can communicate with the FPGA to which the hypervisor shell is written.

### Step 3

The system of this example may assist in registering information about physically connected FPGAs in a database. Since the information about the FPGA is registered in advance in the database, the system of the present example has the advantage of using the information of the FPGA through the information held by the database.

Such a database may be capable of storing the information described below, and may or may not use a database management system. If there is a data model based on the database, it may be of various types, such as hierarchical, network, relational, or object data models, and the types are not limited. Further, the hardware resource for realizing the database may be a dedicated device, a general purpose device, or various information processing devices such as a cloud, a server, etc.

When a database is used, the system of this example may have access to the database, and the system of this example may or may not have the database. In the latter case, the system of this example may be connected directly or indirectly to the database via a network or the like.

The database may store information that actually identifies an FPGA in association with information about the functions of the FPGA (sometimes referred to as "resource information" in this document). The resource information includes, for example, information such as the type of the reconfigurable device, attributes related to the computing device, attributes related to the storage device, and/or attributes related to the communication device. The attributes of the computing device may include the type of computing device, the number of computing devices such as cell number, the capability of the computing device such as clock frequency, and/or the power used by the computing device. The computing device may include, for example, a logic element (LE), a logic cell (LC), and/or a LUT (lookup table). Attributes of the storage device may include the type of storage device, the capacity of the storage device, the speed of reading and writing of the storage device, and/or the power used by the storage device. The storage device may be, for example, an on-chip storage device within the reconfigurable device, but may be other storage devices installed outside the reconfigurable device. Attributes pertaining to the communication device may include attributes pertaining to the internal communication device and/or attributes pertaining to the external communication device. The attribute of the internal communication device may be information of the communication in the FPGA. Attributes of the external communication device may include network bandwidth and/or bandwidth rate for communication with the outside world.

An FPGA may also include one or more PR regions. A PR region is a compartment that can be independently modified the circuit configuration. For each PR region, the FPGA may perform one or more independent operations using partial reconfiguration or may perform one or more independent operations without using partial reconfiguration. Since they are independent, for example, if an FPGA includes PR region A and PR region B, PR region A and PR region B may operate independently for circuit rewriting and circuit execution. Therefore, it may be possible to rewrite the PR region B while the PR region A is executing.

In the present document, the "one/a" resource information may be a unit that can be used as a hardware resource by a user. Thus, if the FPGA is not managed per PR region, the resource information may be a single FPGA, but if the FPGA is managed per PR region and is a hardware resource available per PR region, the resource information may be a single PR region in a single FPGA.

The database may store the resource information associated with each of one or more PR regions contained within an FPGA.

It should be noted that there may be a plurality of methods for setting PR regions for a single FPGA. For example, an FPGA may be divided into two PR regions, PR regions A and B, or four PR regions, PR regions A to D. In such a case where the partitioning methods are different, since the resource information for each PR region is also different, the resource information may be stored in association with a specific PR region in a certain partitioning method.

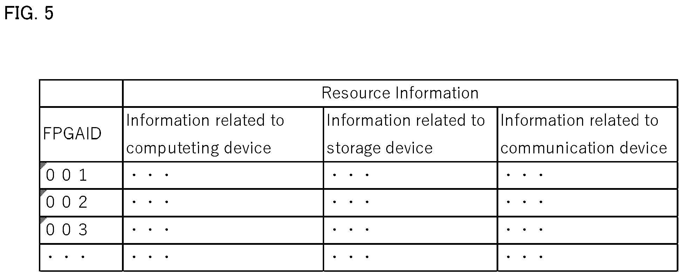

FIG. 5 is an example of a logical arrangement of information contained in a database in which information of resources of the FPGA is registered. The FPGAID indicates the ID assigned to the FPGA actually connected to the system of this example. Since the resource information may have the above-mentioned classification, the resource information may be stored in association with the ID of each FPGA.

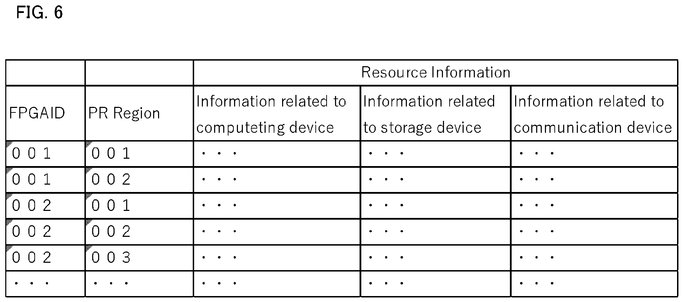

FIG. 6 is another example of a logical arrangement of information in a database in which information on resources of the FPGA is registered. In this figure, a plurality of PR regions are set for an FPGA, for example, two PR regions are set for an FPGAID of 001 and three PR regions are set for an FPGAID of 002. Resource information is set for each PR region. This is because each PR region may have the same or different resources. Especially in the latter case, it is advantageous to set resource information corresponding to each PR region.

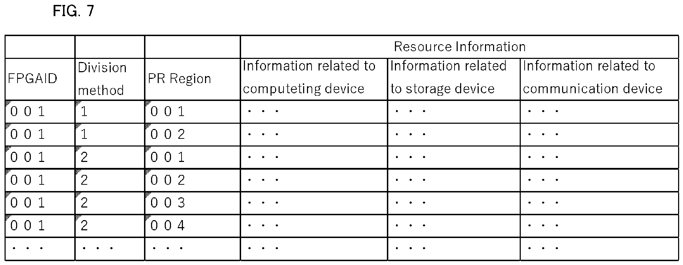

FIG. 7 is another example of logically organizing information in a database in which information on resources of the FPGA is registered. This figure shows a case where there are a plurality of PR region division methods for an FPGA. For example, for the FPGAID of 001, there are a division method 1 and a division method 2 for the PR region, where the division method 1 is a method for dividing into two PR regions, and the division method 2 is set as a method for dividing into four PR regions. Since each of the PR regions may have the same or different resources as described above, resource information about each PR region may be stored in association with information identifying each PR region.

Also, although not shown in FIGS. 5 to 7, the database may store information specifying the type of FPGA in association with information specifying each actual FPGA. Because the target type of FPGA can be used by the user during programming or bitstream generation, such as VHDL in hardware description language (HDL) or a high-level synthesis language such as Verilog or C.

Further, the database may store information indicating whether or not each PR region is in use in association with the corresponding PR region. The information indicating the presence or absence of such use has the advantage of managing whether or not the corresponding PR region is used by the user

Further, when each PR region is used, the database may store information indicating the PR region being used and information indicating the user being used in association with each other. In this case, it is advantageous to manage users when PR regions are used.

The database may store information relating to the user associated with information indicating the user. The information about the user may include information about the user that identifies the user in the real world, such as the address and email address of the user, the ID of the user, a password corresponding to the ID, and/or information about the service used by the user. Information about the service may include information about the course of the service for which the user has paid and/or information about the options to which the user may subscribe.

The database may also be associated with each FPGA to store information related to the license for each FPGA. For example, the database may store information indicating the presence or absence of a required license for each FPGA. The database may also store information indicating the type of license required for each FPGA in association with corresponding FPGA. By storing such license information, it is advantageous to verify whether or not a license is required when each FPGA is used and the type of license. The license may be for each type of FPGA, operation function, storage function, and/or communication function. The license may be different for each type of FPGA, operation function, storage function, and/or communication function. In particular, it may store licenses for a variety of licenses, including inexpensive, expensive, and special-purpose licenses. The license may be a license for a single FPGA or a license for a package for a plurality of FPGAs, depending on its feature.

The database may also have information relating to licenses held by such users in association with information indicating such users. For example, it may have information identifying the presence and/or type of license which such user has. In this case, there is an advantage that information indicating which FPGA the user has a license to use can be generated or configured to allow verification.

The database may also store physical information about the FPGA in association with information indicating the FPGA. Physical information about the FPGA may include, for example, geographic information about the location of the FPGA. The physical information about the FPGA may also include, for example, latitude and longitude where the FPGA is installed, the name of the facility where the FPGA is installed, the name of the facility manager who manages the FPGA, and/or management level information of the facility where the FPGA is managed. Such information may be useful as reference information for taking into account security and incident response capabilities on the location and management of FPGAs.

The database may consist of a single database or a plurality of databases for all FPGAs that can be connected. The latter may be managed separately into, for example, a database for an FPGA in which the partition shell described below has been written and a database for an FPGA in which the partition shell has not been written. In the latter case, when the amount of the FPGA already written is little, there is an advantage of quick access.

Resource information about the FPGA may be manually registered in the database by a person, or recorded and registered in the database as information corresponding to the FPGA.

### 2.2.2. Operational Stage

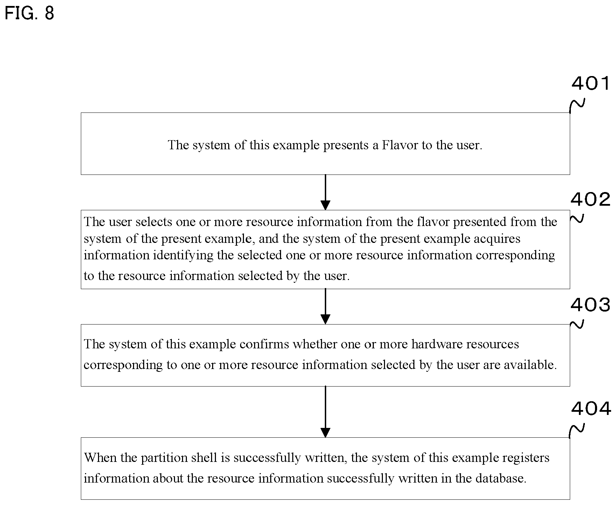

The operational stage will be described with reference to FIG. 8.

### Step 1

The system of this example presents a Flavor to the user. The flavor may be a template for virtual hardware. Flavor is a term used in OpenStack for the virtualization middleware, but it may be something with similar functions in other virtualization middleware. The flavor may be displayed on a display device provided by the system of this example. The flavor may include one or more resource information for one or more FPGAs. The resource information may include something associated with a device name, a PR shell, a PR region, and/or device information. A PR shell is a shell that manages PR regions and may be the same as a partition shell in this document. By displaying the flavor, the user has the advantage of selecting the resource information suitable for the circuit to be written using the resource information. In particular, as described above, since the resource information includes information such as the type of reconfigurable device, attributes related to the computing device, attributes related to the storage device, and/or attributes related to the communication device, it is advantageous to be able to select the appropriate one for the circuit to be written.

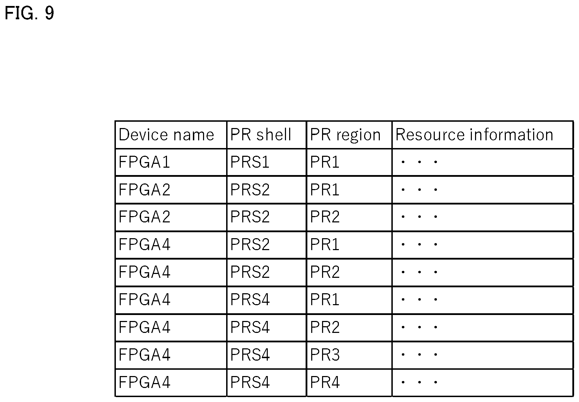

FIG. 9 is an example of a flavor. In this example, the device name is FPGA1, while the PR shell is 1 (displayed as PRS1), and the PR region is displayed as PR1. Further, for a device whose name is FPGA2, a shell capable of managing two PR regions corresponds to the PR shell (displayed as PRS2), and the two PR regions are displayed as PR1 and PR2, respectively. The flavor may also include information indicating a plurality of ways to configure PR regions for a device. For example, the FPGA4 may be divided into two PR regions or four PR regions. In the former, the names PR1 and PR2 are given to the two PR regions, and PRS2 corresponds to the shell for managing them. In the latter, the names PR1 to PR4 are given to the four PR regions, and PRS4 corresponds to the shell for managing them. Although the method of dividing the FPGA4 into two PR regions and four PR regions has been described, the system of the present example may be capable of managing any number of PR regions corresponding to each FPGA when the FPGA can be divided into any number of PR regions. In this case, the system of this example can manage a combination of the number of PR regions that can be divided and such combination may be included in the flavor. Thus, by presenting a plurality of partitioning methods for the same device, the user has the advantage of selecting one of the partitioning methods acceptable for the physical device. Note that the database may store one or more partitioning methods associated with one FPGA device so that they can be displayed. In this figure, a PR shell is displayed, but such a PR shell may not be displayed.

The flavor may also include a type of FPGA associated with information indicating one FPGA as an element of the resource information as described above. In this case, the user has the advantage of selecting the desired resource information including the type of FPGA. The flavor may also include a PR region as an element of the resource information as described above. In this case, the user has the advantage of selecting the desired resource information including the resource information. For example, an application bitstream to be written in an FPGA may be generated depending on the type of FPGA and/or PR region. For example, a program coded with a hardware description language or a high-level synthesis language for rewriting an FPGA has the advantage of utilizing FPGA type and/or PR region information when compiled to generate a bitstream. This is advantageous to avoid a problem to require a new compilation in that a program for rewriting an FPGA may require information of a type of FPGA and/or a PR region at the time of compilation, and may require a large amount of time, such as several hours, to compile, and if the type of FPGA and/or the PR region pertaining to the compiled program for the FPGA prepared by the user is different from the type of FPGA and/or the PR region provided by the system of this example.

The resource information presented by the flavor may or may not have a one-to-one relationship with the resource information in the real world. The former indicates that the resource information presented by the flavor actually exists in reality, and means that, for example, if there are two hardware resources of the same resource information α in reality, the flavor can also present two identical pieces of information. In this case, there is an advantage that the hardware resources corresponding to the resource information can be displayed including substantially only one or a plurality of hardware resources. On the other hand, the latter may have a one-to-many relationship between the resource information presented by the flavor and the resource information in the real world. For example, if there are actually two hardware resources of the same resource information α, the flavor means to present one such resource information α. In this case, since the resource information is the same, the display area can be effectively utilized.

The flavor may also display both of the above. For example, the resource information presented by the flavor may separately present different elements as many while displaying one of the one-to-many relationship with the resource information in the real world. The various elements as many may be, for example, the number of hardware resources related to the actual resource information, the installation location where the hardware resources related to the actual resource information are installed, the distance from the system to the location where the hardware resources related to the actual resource information are installed, and the like. Here, the distance may be a physical distance or a distance related to information communication, as described later.

The flavor may also include and present all of the resource information provided by the database, whether the device is available to the user or not. In this case, the advantage is that the user can understand what hardware resources the database has. For example, there is an advantage that the user can understand, including whether there are more than or less than a predetermined number of hardware resources including certain resource information.

Alternatively, the flavor may include and present one or more resource information with a writable user, independent of a specific user. That is, the flavor may present resource information excluding resource information in use. In this case, since the resource information already in use is not displayed, the resource information can be easily selected. In this case, additionally, the resource information currently used by the user who selects the resource information may be displayed. In this case, it is advantageous that the user who selects the resource information can select new resource information while referring to the resource information currently used by the user.

Alternatively, the flavor may include and present one or more resource information available to a particular user selecting the flavor. For example, the user may have predetermined the available resource information according to the presence/type of the license held by the user, the courses, or rules of the members of the system in this example, and only one or more resource information available to the user may be presented. In this case, the resource information currently used by the user who selects the resource information may also be displayed. In this case, it is advantageous that the user who selects the resource information can select new resource information while referring to the resource information currently used by the user.

Alternatively, the flavor may include and present one or more resource information available to a particular user selecting the flavor, and one or more resource information available if the particular user satisfies certain conditions. Here, specific conditions may include, for example, obtaining a new license, changing the course of membership in the system of this example, and/or obtaining options for membership in the system of this example. These specific conditions may also be presented in association with available resource information if each condition is satisfied. In this case, the user has the advantage of understanding what conditions can be satisfied to select the corresponding resource information.

The flavor may also include and present physical information about the FPGA. In this case, the user has the advantage of being able to make a choice by considering the physical information of the FPGA.

Physical information about the FPGA may include, for example, geographic information about the location of the FPGA. The physical information about the FPGA may also include, for example, latitude and longitude where the FPGA is installed, the name of the facility where the FPGA is installed, the name of the facility manager who manages the FPGA, and/or management level information of the facility where the FPGA is managed. If such information is displayed in association with physical information corresponding to the resource information, it may be advantageous as reference information regarding the location and management of the FPGA in consideration of security, incident responsiveness, etc.

The physical information about the FPGAs may also include information indicating the distance between the FPGAs. The distance between the FPGAs may be a physical distance or a distance related to information communication. The former may be the Euclidean distance, and the measuring method may be the linear distance between FPGAs or the distance along the communication network between FPGAs. The distance for communication of the latter information may be the number of hops or the amount of network bandwidth in communication between FPGAs. In this case, there is an advantage that the distance can be specified based on the communication status. Further, the distance between the FPGAs described above may be the distance between the two FPGAs if they are two FPGAs, and, for the three or more FPGAs, the distance between the FPGAs may be the sum of the distances between each of the two FPGAs between the three or more FPGAs or may be the maximum distance for transmitting information between the three or more FPGAs. The distance between the FPGAs described above may be such that information indicating the distance between the selected plurality of FPGAs is calculated and displayed for the selected plurality of resource information. In this case, the choice may be provisional.

The distance between devices may be displayed using a two-dimensional or three-dimensional graph. In particular, such graphs may be displayed such that each node of the graph is positioned at a position corresponding to the calculated distance between devices described above. In this case, the user has the advantage of being able to understand them more intuitively.

Also, in the flavor, PR regions that a user can provide for a FPGA may be something corresponding to the type and/or number of PR regions that a pre-prepared partition shell can provide for the FPGA. For example, if an administrator has previously prepared one for PR region 2 and one for PR region 4 for an FPGA, the flavor may include resource information in the case of PR region 2 and/or resource information in the case of PR region 4.

Also, as will be described later, if the partition shell has the capability of being hierarchically provided, the flavor may include a plurality of patterns that can be provided when the partition shell is written, even to an FPGA where the partition shell has been written, for a PR region where the partition shell has not been written. For example, in an FPGA in which a partition shell (first partition shell) for providing two PR regions was written, if one PR region (first PR region) had already been written, and if the partition shell was not hierarchically provided, the flavor could provide only one remaining PR region (second PR region) (Even if it is possible to provide a partition shell different from the first partition shell that can provide the number and type of multiple PR regions for such FPGA, if the first PR region has already been written and the first PR region and the first partition shell are not deleted). However, when a partition shell (second partition shell) is written in such a second PR region, one or more resource information may be provided to the extent that such a second partition shell can be provided.

As described above, the flavor is expressed in tabular form, but may be displayed to the user in such a manner, or the flavor may be displayed to the user in various expression manners, not limited to such manner.

Although the information to be presented to the user as a flavor has been described in this step, in addition to that, all or part of the information stored in the database described in the preparatory stage may be presented to the user as a flavor.

### Step 2

Next, the user selects one or more resource information from the flavor presented from the system of the present example, and the system of the present example acquires information identifying the selected one or more resource information corresponding to the resource information selected by the user

In this step, when the flavor of the system of the present example presents the resource information corresponding to the resource information in the physical hardware resource on a one-to-one basis, the information identifying the hardware resource corresponding to the resource information selected by the user on a one-to-one basis may be acquired corresponding to the resource information selected by the user.

On the other hand, if the system of the present example has a one-to-many relationship between the resource information in the flavor presented in the above-described flavor and the hardware resources pertaining to the actual resource information, the system of the present example may perform hardware resource identification processing to identify one hardware resource among the plurality of hardware resources.

The hardware resource identification process may be executed from various viewpoints. For example, the hardware resource identification process may use information related to the user and/or information related to the hardware resources used by the user.

Further, information related to the user may be information related to the member of the user and/or information related to the membership period of the user.

As an example to use information related to the membership period of the user, the system of this example may use the length of the user's membership period to identify hardware resources. For example, the system of the present example may allocate one of the hardware resources for the long-term use plan when the length of the remaining period of the user's membership period is not less than a predetermined period. In this case, it is advantageous that the administrator of the system in this example can efficiently perform maintenance of hardware resources. For example, the system of this example may identify hardware resources by using the length of the remaining period of the user's membership period and the scheduled replacement schedule of the hardware. For example, in the system of the present example, when the length of the remaining period of the membership period of the user is not less than a predetermined period, the system may not allocate the hardware resources whose remaining period is less than a predetermined period until the replacement time of the hardware resources. Further, in the system of the present example, when the length of the remaining period of the membership period of the user is the first predetermined period, the hardware resources may be determined for the hardware resources having the first predetermined period or longer until the next replacement period of the hardware resources. In such a case, when there is no extension of the membership period of the user, there is an advantage that the maintenance of the hardware resources can be performed efficiently. It should be noted that the information related to the membership period may include the remaining period for which hardware resources are available and/or the total or duration period from the time when the user joined the membership of the system of this example.

Further, the information related to the member of the user may include information related to the course or position of the member. For example, the system of this example may allocate one of the predetermined hardware resources when the course of the user's membership is predetermined and/or the status of the member is predetermined. The predetermined hardware resource may be more stable and robust than other hardware resources. In this case, if the user is a specific member or a prescribed course, there is an advantage of using higher quality hardware resources. It should be noted that the information related to the course or position of the member may be selected by the user when using the system of this example. For example, it may be obtained by a contract to use a certain amount of resource information.

Further, the information related to the hardware resources used by the user may include one or more hardware resources in use by the user at the time of the selection described above. For example, the system of this example may include, among actual hardware resources matching the resource information selected by the user, 1) hardware resources in the same FPGA as the FPGA including one or more hardware resources that are currently in use by the user, 2) hardware resources in the same local area network or bus as the one or more hardware resources currently in use by the user, and/or 3) something that is a short distance from the one or more hardware resources currently in use by the user.

In the case of (1) above, since it is in the same FPGA, the hardware resources in the same FPGA can be used as the hardware resources used by the user for the same or related applications, thereby providing the hardware resources for more efficient communication can be supported.

In the case of (2) above, since the former same local area network or bus is also in the same network or bus, it is advantageous to support the provision of hardware resources for realizing more efficient communication. It should be noted that the identity of the local area network or bus may be such that processing for carrying out communication across the network can be reduced, and any hierarchy may be used.

The above-described 2) may be a virtual local network. In this case, although the physical distance is not necessarily closer than the predetermined distance and the distance for information communication is not necessarily shorter than the predetermined distance, there is an advantage of high security.

In the case of 3), the distance may be a physical distance or a distance related to information communication. Among the actual hardware resources matching the resource information selected by the user, those having a short distance from one or more hardware resources currently used by the user are selected, so that the provision of hardware resources realizing more efficient communication can be supported compared with other hardware resources.

### Step 3

Next, the system of this example confirms whether one or more hardware resources corresponding to one or more resource information selected by the user are available. That is, the system of this example attempts to write a partition shell corresponding to the resource information to the FPGA device which is a hardware resource corresponding to the resource information. In such writing, a bit stream may be written, and the method of transmitting the information may be written using TAG or USB, without limitation. In addition, a known technique may be used for the writing technique to the FPGA itself.

When the system of the present example fails to write the partition shell, the system of the present example displays that the resource information selected by the user cannot be selected by displaying the failure to write the partition shell, and the system of the present example may display to urge the user to select new resource information.

The partition shell may be the same as or different from the partition shell described below. The partition shell may have a function to assist the user in utilizing the hardware resources in the FPGA to which the partition shell is written, and need not have all the functions of the partition shell described below.

### Step 4

When the partition shell is successfully written, the system of this example registers information about the resource information successfully written in the database.

In addition, the system of this example may provide information about the resource information that has been successfully written to the user by feedback. The mode of feedback to the user may be various. For example, information about resource information that has been successfully written may be displayed on a display device, emailed to a user, or stored in a predetermined location of a user accessible to the user. The information about the resource information may include information identifying the hardware resource to which the partition shell was actually written, and the information identifying the hardware resource may include information identifying a specific reconfigurable device. The information about the resource information may also include the type of FPGA, attributes related to the computing device, attributes related to the storage device, attributes related to the communication device, PR regions, and/or information identifying the location on the network. For example, in the case of an FPGA, the information identifying the location on the network may be an IP address, and the PR region in the FPGA may be an IP address or a port number.

The user may be able to access the written PR region using this information. For example, the user writes a program that is an application that the user plans to use for the FPGA and has been converted to a bit stream by compilation to the corresponding FPGA using the information.

The system of this example may assist in writing the user-provided bit stream to the corresponding FPGA using the information described above. In this case, it may be written via USB (JTAG), Ethernet, or PCIe.

Also, in a manner different from that described above, the system of the present example is configured in such a way that, once the resource information is selected by the user, it cannot be selected by attempting to write a PR shell.

It should be noted that, at a stage prior to step 1 of the operational stage, the system of this example may perform a process of managing the membership registration of the user. For example, the system of the present example may have a function of managing the registration of a user and the modification of the member information of the user

The registration of the user may be a process in which the system of the present example acquires information related to the user described above. For example, the system of this example may present the user with a course and/or service options that the user can select, and the system of this example may acquire and store information that identifies the user in association with the course and/or service option the user has selected from among the presented course and/or service options.

In the process of acquiring information about the user, the system of the present example may acquire directional information about the reconfigurable device used by the user and store the information in association with information identifying the user. Directional information about the reconfigurable device may include, for example, information about the types, attributes of the computing device, attributes of the storage device, and/or attributes of the communication device of the reconfigurable device to be utilized by the user. This is because when there is a specific type of reconfigurable device that a user normally uses, it is considered that the user is familiar with that type of reconfigurable device, and therefore, the reconfigurable device used in the system of this example is also likely to be the same type of reconfigurable device, so using such information may improve the conveniences. Similarly, if the attributes of the computing device, the attributes of the storage device, and/or the attributes of the communication device are in accordance with the user's direction, the convenience of the user may be improved.

Note that the user may input the above steps directly to the system of this example. For example, if the system of this example includes a user terminal used by a user, the steps described above may involve interaction with the user in the system of this example, the system of this example may display directly to the user, and the system of this example may directly obtain the input of the user.

On the other hand, if the system of this example does not include a display to or input mechanism from a user, the system of this example may be directly or indirectly connected to a user terminal utilized by a user not included in the system of this example, and interaction of the system of this example with one or more user terminals may advance the steps described above. For example, in step 1 described above, information including the flavor may be transmitted from the system of the present example to the user terminal, and the information including the flavor may be displayed at the user terminal. In step 2 described above, the resource information selected in the user terminal may be transmitted from the user terminal to the system of the present example, and the resource information may be received in the system of the present example. In step 3 described above, the system of the present example may confirm whether or not the hardware resources corresponding to the resource information are available. In step 4 described above, the system of this example may register in the database.

Note that, even if the system of this example includes or does not include a terminal used by a user, the reconfigurable device to which the partition shell of step 3 is written may be a part of the system of this example or may be external to the system of this example. Also, the database registered in step 4 may be a part of the system of this example or may be external to the system of this example.

### 3 The Second System

The second system may relate to a reconfigurable device. For example, the second system may be a reconfigurable device itself that implements the functions described below as functions written to the FPGA, a bitstream that implements the functions described below when written into the reconfigurable device, or a program written in an HDL description language that is converted into such a bitstream by compilation. As described above, FPGAs will be mainly used in the following description, but they can be similarly implemented in reconfigurable devices instead of FPGAs.

### 3.1. System Function

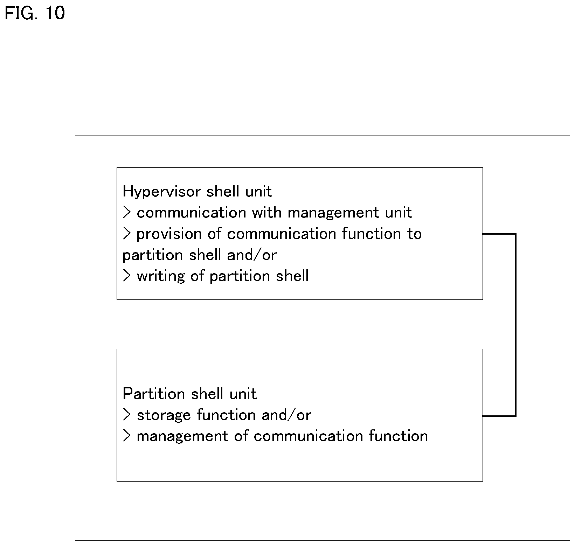

Functions written to the FPGA may include functions processed by the hypervisor shell (hypervisor shell function) and/or functions processed by the partition shell (partition shell function). That is, the FPGA after written with such functions may include a hypervisor shell unit including the hypervisor shell function and/or a partition shell unit including the partition shell function, as described later. FIG. 10 illustrates such functions and examples of functions provided by these functions.

One hypervisor shell may be associated with one FPGA. Such one hypervisor shell may be written in such one FPGA. One partition shell may be associated with one FPGA. Thus, for example, even if a single FPGA has multiple PR regions, it may have a single partition shell, which may be written in the single FPGA.

The hypervisor shell may be determined according to information such as the type of the FPGA to be written, attributes related to the computing device, attributes related to the storage device, and/or attributes related to the communication device. On the other hand, the partition shell may be determined according to the type of FPGA to be written, attributes related to the computing device, attributes related to the storage device, attributes related to the communication device, the number of PR regions, attributes related to the computing device in the PR region, attributes related to the storage device in the PR region, and/or attributes related to the communication device in the PR region.

Therefore, the database associated with the system of this example may store a hypervisor shell associated with information such as the type of FPGA, attributes associated with the computing device, attributes associated with the storage device, and/or attributes associated with the communication device. In this case, as described below, the system of the present example has the advantage of acquiring the type and/or function of the FPGA and identifying and using the corresponding hypervisor shell according to the type and/or function of the FPGA. In addition, the database associated with the system of this example may store partition shells associated with information such as the type of FPGA, attributes associated with computing devices, attributes associated with storage devices, attributes associated with communication devices, and/or the number of PR regions. In this case, as described below, the system of this example has the advantage of acquiring the type of FPGA, the function and/or the number of PR regions, and identifying and using the corresponding partition shell according to the type of FPGA, the function and/or the number of PR regions.

In the following, the hypervisor shell and the partition shell may have different functions. However, the hypervisor shell and the partition shell may include the same functions. By dividing the functions to be written to the FPGA into two parts, it is advantageous to distinguish a function that changes in response to dynamic changes in the PR region (partition shell function) from a function that does not change in response to dynamic changes in the PR region (hypervisor shell function).

As for the timing written to the FPGA, the hypervisor shell and the partition shell may be at the same time within a predetermined range or may be different. The former may include, for example, a case in which the partition shell is written immediately after the hypervisor shell is written, or in which the partition shell is written continuously. On the other hand, at different times, the hypervisor shell may be written during registration of the FPGA, and the partition shell may be written at a stage when the user writes application data (or just before the user writes application data). Also, the partition shell can be written in a timing where the partition shell may be written once, and then the partition shell is deleted and the partition shell is written again.

### 3.1.1. Hypervisor Shell Unit

The hypervisor shell unit may include functions for communication with the management unit, communication with external devices, providing communication functions to the partition shell, writing-related functions, and/or initialization. If the hypervisor shell has some or all of these functions, it has the advantage of improving the convenience of the corresponding functions of the reconfigurable device that can be written to enable program execution.

Communication with the management unit may include the ability to respond to requests from the management unit. For example, when the management unit requests an inquiry about the status of a specific PR region, hypervisor shell unit may respond to the inquiry about the status of the specific PR region. The status of the PR region may include, for example, information such as not being written, being written, etc., and information such as being in use, not being used, etc. Thus, when the FPGA has the function of a hypervisor shell and can communicate with the management unit, the management unit has the advantage of acquiring information about the status of the FPGA from an FPGA different from the normal CPU.

Communication with the external device may include the function of transmitting information to and/or receiving from the external device. The external device may be, for example, a storage medium. In this case, the hypervisor shell may provide an interface to the external device. The external device may also provide an interface for communication with the external storage device by the partition shell described below.

The provision of communication functions to the partition shell may include assistance when PR regions in the FPGA communicate. A PR region in an FPGA may transmit information if it communicates with other PR regions in the same FPGA as its PR region and/or communicates with other devices in the FPGA that are different from its PR region. At this time, the communication function of the partition shell may set and/or change the destination of such information as necessary. The hypervisor shell may include a table (Also referred to as a "communication address table" in this document) of communication destination relationships to provide communication functionality to the partition shell. Such a communication destination table may include a relationship between a destination in an application used by a user (sometimes referred to as a "user destination" in this document), a PR region that is a processing entity in the FPGA, and/or a computing entity outside the FPGA (Also referred to as "node destination" in this document). When the hypervisor shell has a relationship between the user destination and the node destination, the user destination used by the user in the application is set to the node destination provided by the system according to the present document, and the information is transmitted, so that the user can construct the application without concerning that the computing subject of the FPGA is different.

The hypervisor unit may have a write-related function. The Write-related functions may include write functions of partition shell. The hypervisor shell may have a function of writing or a function of supporting writing the partition shell acquired from the management unit into the FPGA to which the hypervisor shell belongs. The function for supporting writing may be used by acquiring a code having a writing function from the management unit. When the hypervisor shell has writing-related functions, the partition shell does not need to be written manually by an administrator or a user, thereby reducing the burden.

The writing-related function of the hypervisor shell unit may have a function related to the user's authority. The function related to the user's authority may include a function for confirming the authority of the PR region to which the user writes. For example, the PR region to which the user writes may include information written to the PR region to which the user has no authority, such as the program of the user and thus the compiled bit stream or information indicating where the bit stream is to be written. In this case, if the writing-related part is written as it is, it will be written to a PR region to which the user has no authority, causing a problem such as, for example, destroying an application running in another user's PR region. Therefore, the hypervisor shell unit to be written may have a function of confirming whether or not the user has write permission for the PR region to be written before performing the process of writing the received bit stream. This feature has the advantage of preventing the writing of the bitstream constituting the application related to the user to a PR region for which the user has no write permission, intentionally or negligently.

When the writing-related function of the hypervisor shell unit includes a function related to the user's authority, for example, the following processing may be performed.

First, the hypervisor shell unit receives information including a first bit stream for realizing the first application related to the first user at the time of writing via the network (step 1).

Next, in response to the receipt of the information including the first bit stream, the hypervisor shell unit acquires information identifying the first PR region to which the first bit stream is written, and information identifying the first application, from the information including the first bit stream (step 2).

Next, the hypervisor shell unit transmits information including information identifying the first application and information identifying the first PR region to be written to the management unit (step 3).

In response to the receipt of the information including the information identifying the first application and the information identifying the first PR region, the management unit determines whether the first application has the authority to be written to the first PR region by using the information identifying the first application and the information identifying the first PR region (step 4).

The management unit transmits permission to execute writing to the hypervisor shell unit when it determines that the authority is present, and does not transmit permission to execute writing to the hypervisor shell unit when it determines that the authority is not present (step 5). In the latter, disapproval to execute the writing may be communicated.

In the above description, instead of the information identifying the first application, the information identifying the user who has given an instruction to write the first application may be used. For example, in step 4 above, the information identifying the first application may be used to specify an instruction to write the first application and/or a first user to execute the first application, and the information of hardware resources allocated to the first user may be used to determine whether the first user has write permission in the first PR region. The above is an example, and if the information including the first bit stream acquired by the hypervisor shell unit contains information identifying the first user, the information may be used and transmitted to the management unit to determine whether the first user has write permission in the first PR region.

In the above description, embodiments are explained that the hypervisor shell unit writes the bis stream. However, instead of such embodiments, in response to an acquisition of information including a bit stream, the hypervisor shell unit may transmit information including the bit stream to a configuration memory in the FPGA to which the hypervisor shell unit belongs, and the configuration memory may acquire information identifying a PR region to be written from the information including the bit stream, and the configuration memory may write the information including the bit stream to the PR region corresponding to the information identifying the PR region to be written.

The initialization function of the hypervisor shell unit may include an initialization function of a storage function and/or a communication function related to the FPGA to which the hypervisor shell unit belongs. The initialization function may include the ability to return to an unused state. Initialization has the advantage of preventing malfunction. The initialization of the storage function may include, for example, returning the information in the storage function to the initial state. In this case, it is advantageous to avoid a state in which meaningless information is stored. The initialization of the communication function may also include, for example, deleting a queue of FIFOs in the communication function or resetting information in the middle of a bus handshake sequence to return to the initial state. In this case, the intermediate stage of communication can be eliminated.

In particular, since the hypervisor shell unit performs initialization, even if the initialization function is not included in the execution mechanism of the user's application, the distributed processing of the system of this example has the advantage of reducing the malfunction of the application.

The initialization may be performed at various times. For example, the storage and/or communication functions utilized by the partition shell may be initialized in response to the execution of the writing of the above partition shell. Writing the partition shell has the advantage of initializing the application before using it, since the user is scheduled to write the application after that. However, initialization may require time, which may delay the writing of the user's application. In response to the execution of the user's application writing, the storage function and/or the communication function used by the application may be initialized. Writing an application has the advantage of initializing it before using the application because the user is scheduled to use the application afterwards. However, initialization may require time, which may delay the user's use of the application.

In response to the change of the state of the user, the storage function and/or the communication function related to the PR region related to the user may be initialized. For example, in response to the completion of a user's membership course or option, the storage and/or communication functions associated with the PR region for the user may be initialized.

In this case, the management unit may monitor the member courses and options of each user and/or the termination time of the PR region used by the user, and in response to the arrival of these termination timing, the management unit may communicate with the hypervisor shell unit of the FPGA to which the PR region belongs to initialize the storage function and/or communication function related to the PR region using information identifying the PR region used by the user. The hypervisor shell unit may initialize the storage function and/or communication function related to the corresponding PR region in response to such communication from the management unit.

Thus, if the initialization is performed in accordance with a change in the state of the user, especially when the user terminates the use of the PR region, there is a low risk of delaying the next use, even if a time is required for the initialization, when there is a time between such termination timing and the next use timing.

### 3.1.2. Partition Shell Unit

The partition shell unit has a function of supporting functions in the PR region. For example, the clock frequency function, storage function, and/or communication function used by the function in the PR region may be managed. If the partition shell has some or all of these functions, it has the advantage of increasing the convenience of the corresponding functions in the PR region supported by the partition shell.

The partition shell unit may manage the clock frequency function used by the function in the PR region. For example, the partition shell may serve to supply the clock frequency signal to the PR region.

The partition shell unit may have the function of generating one or more clock frequency signals to supply a PR region. The partition shell unit may have a function of generating a plurality of different clock frequency signals. The clock frequency generated by the partition shell unit may be one for which a circuit in the PR region is available. There is an advantage that the user can use the clock frequency signal in the circuit in the PR region without preparing the clock frequency signal himself. Further, when the partition shell unit generates a plurality of different clock frequency signals, a clock frequency signal suitable for the circuit written in the PR region can be selected, and the range of selection of the clock frequency signal available to the circuit is extended. For example, when the circuit in which the reconfigurable device is written is simple, a higher clock frequency signal is set, and when the circuit is complex, a lower clock frequency signal is set, and the clock frequency signal corresponding to the circuit configuration can be selected.

The partition shell unit may also supply one or more clock frequency signals to one PR region. For example, the partition shell unit may supply different clock frequency signals to the same or different circuits written in a PR region. In the case described above, even in the case where a user wants to use different clock frequencies for the same or different circuits in a PR region depending on the complexity, role, etc., of the circuits, there is an advantage of using clock frequency signals corresponding to each circuit.

The clock frequency signal used by the circuit may be determined in advance by a user who determines the circuit to be written. In order for the user to determine the clock frequency utilized by the circuit, the system of this example may assist in an environment where the user can specify the available clock frequency for the circuit in an environment where the circuit is programmed in a hardware description language or a high level synthesis language. Also, if one wishes to supply different clock frequency signals to the same or different plural circuits in a PR region, the system of this example may support an environment in which the user can specify available clock frequencies for each of the same or different circuits in an environment in which the circuits are programmed in a hardware description language or a high-level synthesis language. Environmental support for specifying a clock frequency signal may include, for example, processing to display one or more clock frequency signals available to the circuit, for the same or different circuits, respectively, processing to associate and store a clock frequency signal selected by the user with a target circuit, and/or processing to write a connection relationship between the associated circuit and the clock frequency signal at the time of writing in the PR region.

The partition shell unit may have a function of managing the correspondence relationship between the storage function used by the arithmetic function in the PR region and the storage function used by the FPGA to which the PR region belongs. The management of such correspondence relationship has the advantage of reducing the risk of interfering with memory-related processing in other PR regions. For example, if the memory used by an arithmetic function in a PR region is 000~999 as a memory address, and the memory address corresponds to 20,000-20999 of the storage functions used by the FPGA to which the PR region belongs, the partition shell may have a table indicating the correspondence relationship, and the partition shell may use the table to assist in using the corresponding memory of the storage functions used by the FPGA to which the PR region belongs in correspondence with the specific memory address of the memory used by the arithmetic function in the PR region. The storage function used by the FPGA may be a storage device installed in the FPGA or an external storage device accessible to the FPGA.

The partition shell unit may also have a function of managing the correspondence relationship between information identifying a communication channel used by a communication function in the PR region and information identifying a communication channel with the outside of the FPGA to which the PR region belongs. The management of such correspondence has the advantage of reducing the risk of interfering with communication-related processing in other PR regions. For example, for a communication based on a communication channel used by a PR region, the communication information may be passed to the hypervisor shell with information indicating that it is based on the PR region.

The partition shell unit may be hierarchically provided within the PR region.

The advantage of providing the partition shell portions in a hierarchical manner (For example, another partition shell unit is provided in the PR region managed by a partition shell unit.) will be apparent, for example, in the following example. Assume that an FPGA has two PR regions (Assume that there are two 1/2 PR regions) and one PR region (the first 1/2PR region) has been written and is in use. In this case, the remaining 1/2 of the PR region (the second 1/2PR region) can be provided to the user, but the user considers a case where only 1/4 of the PR region can be used. In this case, the partition shell unit (the first partition shell unit) which has already set two PR regions has been written, and the first 1/2PR region is in use. Therefore, a partition shell unit (the second partition shell unit) capable of managing two 1/4PR regions (the first 1/4PR region and the second 1/4PR region) is newly written in the second 1/2PR region which is not yet used, and the first 1/4PR region is used by the user, thereby providing an advantage of efficient use.

The partition shell unit may consequently communicate with the partition shell unit of the lower layer hierarchically provided as described above. In this case, the partition shell unit may support circuits in the PR region managed by the lower partition shell via communication and/or storage functions managed by the lower partition shell.

### 4. The Third System

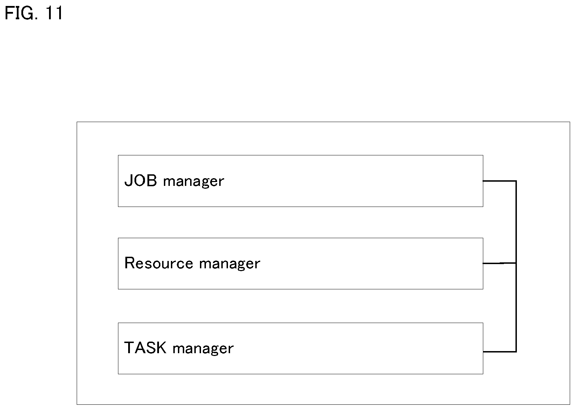

The third system is an example of a system that supports distributed processing using an FPGA. For example, as shown in FIG. 11, the system of this example may include a JOB manager function, a resource manager function, and a TASK manager function. The functions of the JOB manager and the resource manager may be implemented on a program variable device. The functions of the TASK manager may be implemented as functions on a reconfigurable device. As described above, FPGAs will be mainly used in the following description, but they can be similarly implemented in reconfigurable devices instead of FPGAs. In the third system, the hypervisor shell and/or the partition shell may or may not be written in the FPGA. In the latter case, even if the hypervisor shell and/or partition shell are not written, the distributed processing may be executed by writing the bit stream as follows.

### 4.1. Function

### 4.1.1. The JOB Manager

The JOB manager has a function for managing the JOB.

The JOB may be a JOB as a single unit previously determined by a programmer, something further subdivided of a unit determined by a programmer by use of a JOB management technique for distributed processing, or a plurality of units determined by a programmer.

When executed on an FPGA, a JOB may be something converted into a bitstream from something programmed by a programmer. When executed on a program variable device, the JOB may be in a form that is executable on hardware, such as something that is compiled or translated into machine language based on a program programmed by a programmer.

The JOB may be managed by using information that can identify the job such as the ID of the JOB that can uniquely identify the JOB. Therefore, the JOB manager may have a database that stores information identifying the JOB in association with the JOB actually executed.

The JOB manager may perform a data flow analysis on the JOB and determine the order of the JOB to be processed according to the data flow. This order may be determined by performing a data flow analysis using information of input data and output data of each JOB.

In addition, the JOB manager may manage TASK, which is a process with a granularity smaller than the JOB. For example, the management by the JOB manager may include a process for decomposing a single JOB into one or more TASKs, a process for acquiring information about the processing status of the TASKs executed in the hardware resources, and a process for giving instructions for execution in the hardware resources allocated the decomposed one or more TASKs. Information about the processing status of the TASK may include, for example, initialization for the TASK, start of execution of the TASK, management of a timer for execution of the TASK, processing of an abnormality of the TASK, processing of termination of the TASK, and the like. Termination processing may include, for example, the ability to accept a termination report of TASK from TASK. Further, the instruction for execution may include an instruction corresponding to the above-described processing state.

### 4.1.2. The Resource Manager

The resource manager has a function of managing hardware resources to one or more TASKs constituting a JOB. The resource manager may be provided with a database relating to the above resource information associated with the hardware resources and manage the hardware resources.

The resource manager may associate information (e.g., ID, etc.) identifying one or more TASKs constituting a single JOB with the hardware resource to which the TASKs have been written and store them in a database. Such IDs may be assigned for each bit stream. Further, such an ID may be assigned to a single ID for one function, for example, simply described in a program language. Therefore, various input information (arguments) may be given during execution of the function, and a function whose output result can be changed by such arguments may be associated with a single ID. The input information resource manager may use the database to determine whether or not the information identifying the TASK has been written to the hardware resource, and if so, may use a written circuit, and if not, may execute a circuit after writing it anew. Such association has the advantage of reducing unnecessary writing. One TASK may be allocated to one FPGA or one PR region in one FPGA.

The management function of the resource manager may include the function of providing hardware resources for the TASK.

For example, when a request for hardware resources corresponding to TASK is received from the JOB manager, the resource manager may select hardware resources corresponding to the TASK and communicate them to the JOB manager.

In selecting hardware resources, the resource manager may acquire information related to the TASK from the JOB manager. The information related to the TASK may include the resource information described above, for example, information such as the type of reconfigurable device, attributes related to the computing device, attributes related to the storage device, and/or attributes related to the communication device, for performing the TASK. The resource manager may select hardware resources corresponding to the information related to the TASK, i.e., those having hardware resources capable of executing the TASK, from the database related to the resource information. Here, since the selection may be a hardware resource capable of executing TASK, the kinds and type need to be matched among and the type of the reconfigurable device, the attributes related to the computing device, the attributes related to the storage device, and/or the attributes related to the communication device. However functional information such as the attributes related to the computing device, the attributes related to the storage device, and/or the attributes related to the communication device may include the functions of the information related to TASK.

The resource manager may transmit information identifying actual hardware resources corresponding to the selected resource information to the JOB manager. For example, information such as the physical ID of the reconfigurable device to be written, the location on the network such as the IP address identifying the device, and/or the location on the FPGA or the network such as the IP address or port number identifying the PR region to be written may be communicated to the JOB manager. The allocation of the TASK may also be stored in the database in association with information identifying the allocated hardware resources.

Here, the resource manager may sequentially process the following three steps in selecting a hardware resource capable of executing TASK. If the following steps are performed, there is an advantage that the time may be reduced.

### (Step 1)

When the TASK to which the hardware resource is allocated has already been written in the hardware resource, the hardware resource of the operator is allocated. In the case where an operator has already been written, there is an advantage that the time for performing a new writing can be shortened. As described above, the ID associated with the TASK is used for the presence or absence of such a writing. Further, the user may decide whether to use the written data or to write a new data via the ID. In another embodiment, when a certain TASK is being executed using other input information, a configuration for selecting the allocation of the hardware resource or a configuration for selecting the allocation of the other hardware resource may be used. In the latter case, the process may proceed to step 2 below. Such selection may be determined based on a prediction process that predicts a comparison between the time required to write a bitstream corresponding to a new TASK and the expected completion time of another running TASK. It should be noted that the latter may be processed only when information such as the priority TASK is attached to the TASK. In the case of a TASK to be processed on a priority basis, the execution of another TASK is not to be delayed even if the TASK has already been written.

### (Step 2)

When a TASK to which a hardware resource is allocated has not been written in the hardware resource and a PR region capable to be written the TASK can be selected in the database, a bit stream about the TASK is written to the PR region. Compared to the following three steps, it is advantageous to write the partition shell and use the information of such newly selected PR regions to reduce the compilation time that may be required for several hours. The hardware resource identification process described above may be used the selection criteria for the PR region.

### (Step 3)

When a TASK to which a hardware resource is allocated has not been written in the hardware resource and a PR region capable of writing the TASK cannot be selected in the database, a partition shell is written to an FPGA capable of securing a PR region capable of writing the TASK. After such a partition shell is written, a TASK is written to the PR region based on such a partition shell. In this case, the TASK may be written without using the PR region in the FPGA where the hypervisor shell has been written and the partition shell has not been written without newly writing the partition shell. Even if a PR region capable of writing the TASK can be selected, 1) the partition shell may be written to another FPGA capable of securing a PR region capable of writing the TASK separately, and the TASK may be written to the PR region based on the partition shell, or 2) the TASK may be written without using the PR region in an FPGA in which the hypervisor shell has been written and the partition shell has not been written. In the case where the TASK to which the hardware resources are allocated has not been written in the hardware resources and a PR region capable of writing the TASK cannot be selected in the database, instead of the above, the bit stream corresponding to the TASK may be written to the FPGA using a USB cable or JTAG without writing the partition shell and/or hypervisor shell. In this case, the USB cable is connected in advance, and a bit stream corresponding to the TASK may be automatically written by a program via the JTAG, or a person may connect the USB cable and write the bit stream corresponding to the TASK using the

### JTAG.

### 4.1.3. The TASK Manager

The TASK manager has the function of managing the TASK. The TASK manager manages the TASK executed in the same FPGA as the FPGA in which the TASK manager is written, using the instruction from the JOB manager. Also, the TASK manager may communicate the processing status of the TASK to the JOB manager.

The TASK manager may have a table showing the relationship between information indicating a JOB executed in the FPGA where the TASK manager is written and the current execution status of the JOB. Such execution status may include situations such as being executed, not being executed, and/or being interrupted.

Instructions from the JOB manager may include instructions to initialize, start, suspend, or cancel associated with information identifying the JOB.

Initialization includes initialization of storage information and/or communication information used by the JOB. Such initialization instructions may be processed when a new operator is written in the FPGA and/or a new JOB is executed. When an operator is newly written, the storage information and/or the communication information may be initialized as a step of the writing process, but when the initialization is performed again as a step of the distributed process, the initialization can be guaranteed more advantageously. In addition, in the case of a new JOB within the same operator, there is an advantage of eliminating the influence of the processing of the previously executed JOB.

The start may indicate the start of TASK. The TASK manager may obtain the start instruction from the JOB manager in association with the parameters utilized by the operator (input information for executing the TASK). The TASK manager may send the start instruction of the TASK to the PR region executing the TASK related to the start instruction together with input information for executing the TASK to execute the start of the TASK.

The interruption may temporarily stop the execution of TASK. When the start instruction is received again, the execution of TASK may be resumed.

The TASK manager may communicate the abnormal processing of the TASK and the completion report of the TASK to the JOB manager as the processing status of the TASK.

### 4.2. Processing Flow

### 4.2.1. First Embodiment of the Processing Flow

Next, an example of the processing flow of the system of the present example will be described, but it goes without saying that various examples can be realized.

First, as a preparatory step, information about the actual FPGA is stored in a database related to the resource manager. For example, information such as the type of the FPGA, attributes related to the computing device, attributes related to the storage device, and/or attributes related to the communication device is stored in association with information identifying the connected physical FPGA. As described above, the configuration enables the resource manager to identify a hardware resource capable of executing the queried JOB. Such information may be manually or automatically registered in a database.

The JOB manager may also have a table of information related to each JOB.

### Step 1

The JOB manager performs data flow analysis of the JOB and determines the JOB to be executed. Here, the JOB manager may perform data flow analysis using information related to each JOB. The information related to the JOB may be, for example, information necessary for data flow analysis such as input data of the JOB and output data of the JOB. Known techniques may be used for the data flow analysis itself. The JOB may also be compiled to be executable on an FPGA and may be in the form of a bit stream.

### Step 2

The JOB manager queries the resource manager for hardware resources that can execute the JOB to be executed. Here, the resource information required by each JOB may be held by the JOB manager in advance. The resource information may be pre-registered by the programmer as the resource information necessary for executing each JOB. If the JOB is compiled as described above and is a bit stream, the resource information may include information about the FPGA assumed and/or information about the PR region, and may be used to select hardware resources.

### Step 3

A resource manager determines hardware resources for a JOB to be executed, and transmits the hardware resources to the JOB manager. In this case, the above three steps may be processed.

### Step 4

A JOB manager communicates a bit stream related to a JOB and/or input information at the execution of the JOB to hardware resources corresponding to each JOB. In this case, the operator associated with the partition shell and/or JOB may be written in the corresponding hardware resource in a manner such as a bit stream. In this case, an FPGA writer and/or a partition shell may be used for writing.

### Step 5

The TASK manager in the hardware resource corresponding to each JOB manages the TASK included in the JOB and proceeds with the execution of the TASK.

### 4.2.2. Example of the Second Embodiment of Processing Flow

Next, as an aspect of the above-described processing flow, a flow focusing on the JOB manager and the TASK manager will be described. In the following flow, it is an example that the JOB manager also performs the role of the resource manager described above. In an example of using an FPGA writer, such functions may be implemented in any location other than within the reconfigurable device.

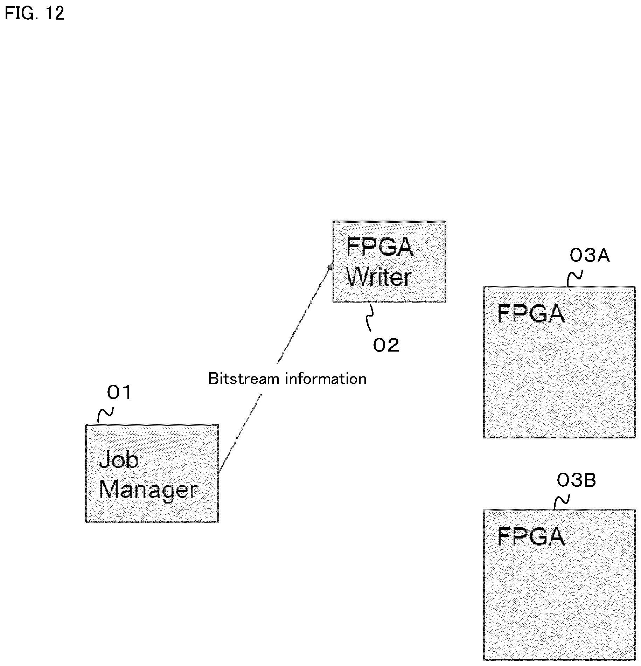

First, as shown in FIG. 12, the JOB manager 01 sends bit stream information to be used by the FPGAs 03A and 03B to the FPGA writer 02.

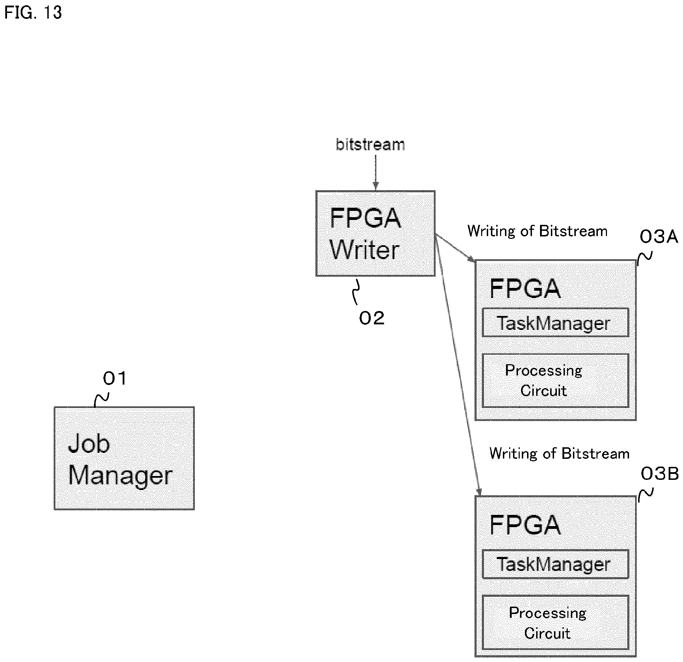

Next, as shown in FIG. 13, the FPGA writer 02 sends a bit stream to the FPGAs 03A and 03B and writes them, respectively.

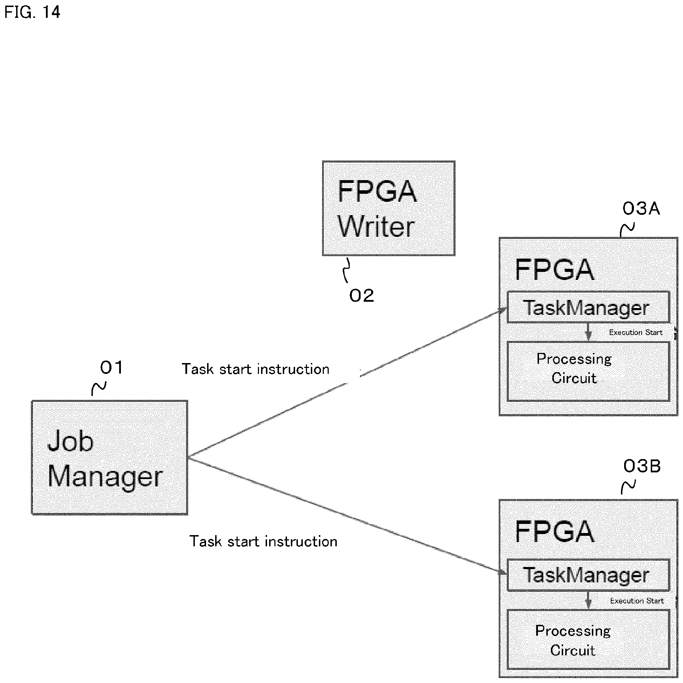

Then, as shown in FIG. 14, the job manager 01 transmits a task start instruction to each of the TASK managers in the FPGAs 03A and 03B, which are the execution locations of the tasks, and each of the TASK managers starts execution in a processing circuit in the same FPGA.

In the above example, the bit stream is transmitted from the JOB manager, but when the JOB to be executed in the JOB manager and the hardware resource to be the execution place are determined, the bit stream corresponding to the JOB may be stored and utilized in the storage, database, and storage system of the information processing apparatus in which the FPGA writer is executed.

### 4.2.3. Example of the Third Embodiment of Processing Flow

Next, an example of summing 1 to 1000 will be described as an example of distributed processing.

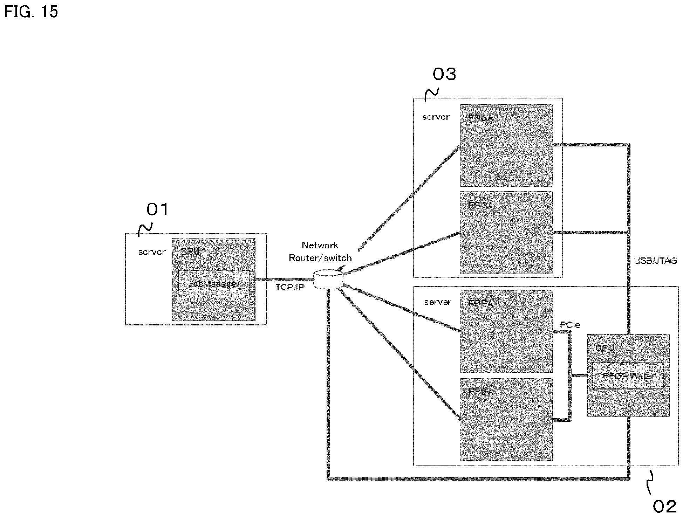

In the present example, as shown in FIG. 15, the system of the present example may include a server 01 with a JOB manager implemented in a program variable device, a server 02 with a program variable device implementing an FPGA writer and an FPGA connected by PCIe to the program variable device connected via a network, and a server 03 with an FPGA. Such a configuration is an example, the number of FPGAs in the server is not limited to two but can be any number of one or a plurality of FPGAs, the number of servers including an FPGA connected to an FPGA writer is not limited to two but can be any number of one or a plurality of FPGAs, and the network configuration may be various.

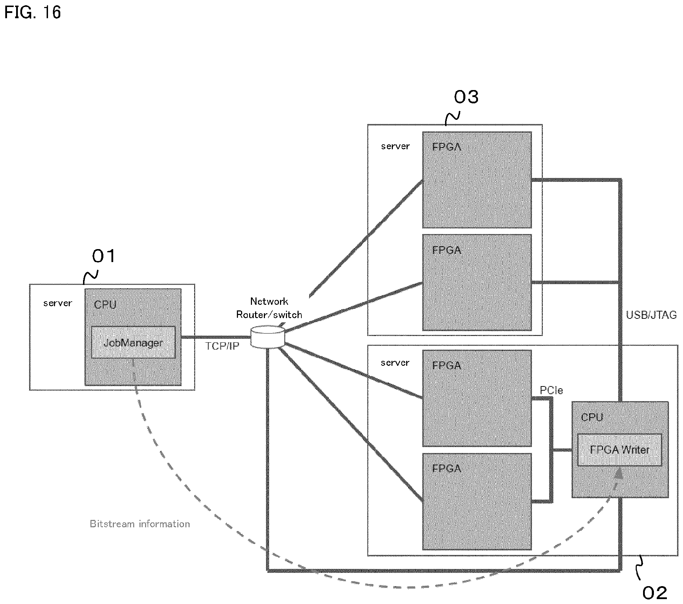

FIG. 16 shows a state in which a bit stream to be written to the FPGA is sent from the JOB manager to the FPGA writer in the server 02. Here, the bit streams used for each FPGA may be the same or different. For example, although the sum of 1 to 1000 is assumed to be calculated separately from 1 to 250, 251 to 500, 501 to 750, and 751 to 1000 in the present example as described later, the bit stream for the FPGA performing the process of calculating each of these divided partial calculations and returning the result thereof may be different from the bit stream for the FPGA performing the process of calculating the sum of them in addition to these divided partial calculations. In the former case, if the type of the FPGA to be written and the functions in the FPGA are different, the bit stream may be corresponding to them.

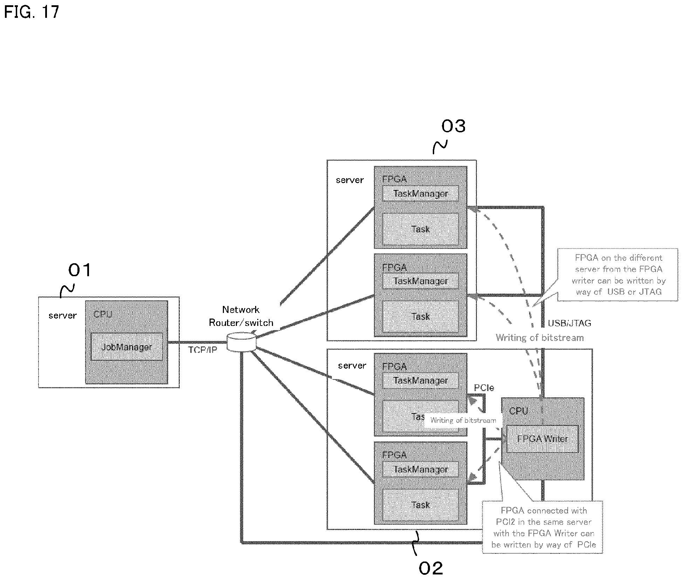

Next, FIG. 17 shows how an FPGA writer writes a bit stream to each FPGA. Here, writing of the bit stream to each FPGA may be written via an interconnect such as PCIe, USB, JTAG, Ethernet, Infiniband, etc. These writes may be in a server where the FPGA to be written is the same as the FPGA writer or in a server different from the FPGA writer.

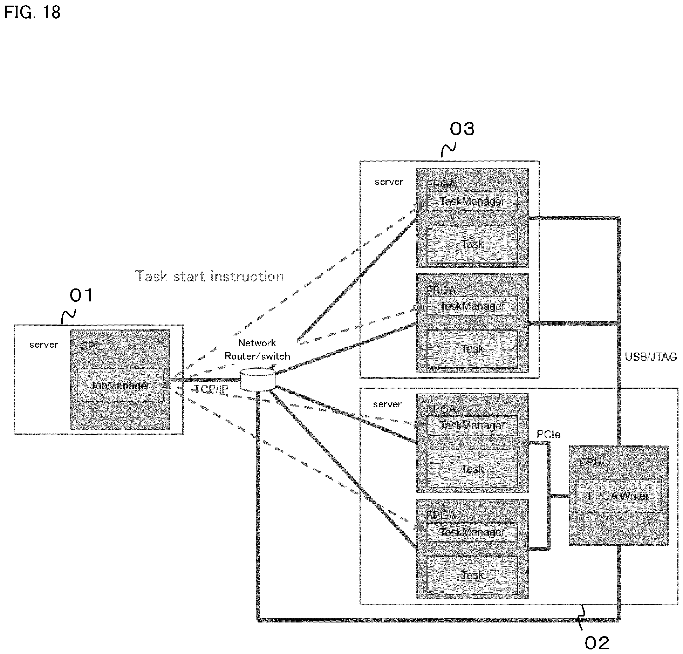

FIG. 18 shows a state in which a task start instruction is transmitted from a JOB manager to a task manager in each FPGA. In such a step, input information utilized for the task may also be communicated. For example, in this example, input information such as 1 to 250, 251 to 500, 501 to 750, 751 to 1000 may be transmitted.

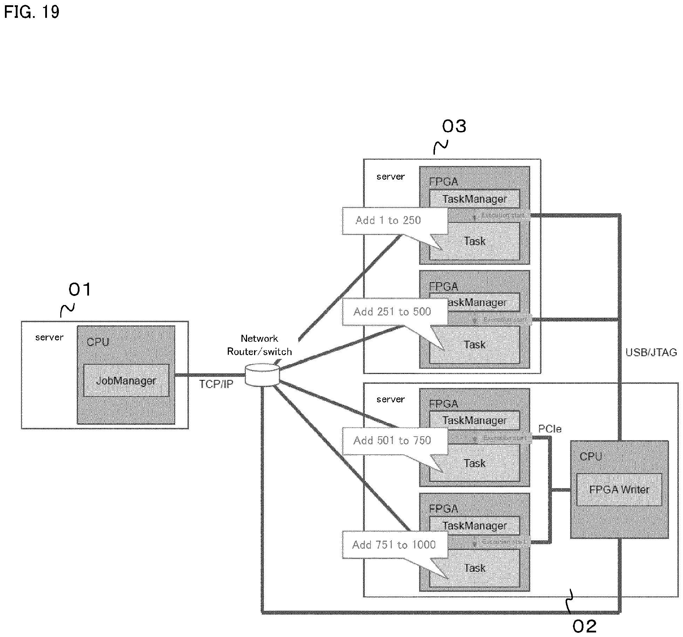

Next, FIG. 19 shows a processing circuit in which a bit stream is written in each FPGA executes a task in response to an instruction from the TASK manager. For example, in this example, portions 1 to 250, 251 to 500, 501 to 750, and 751 to 1000 may be calculated.

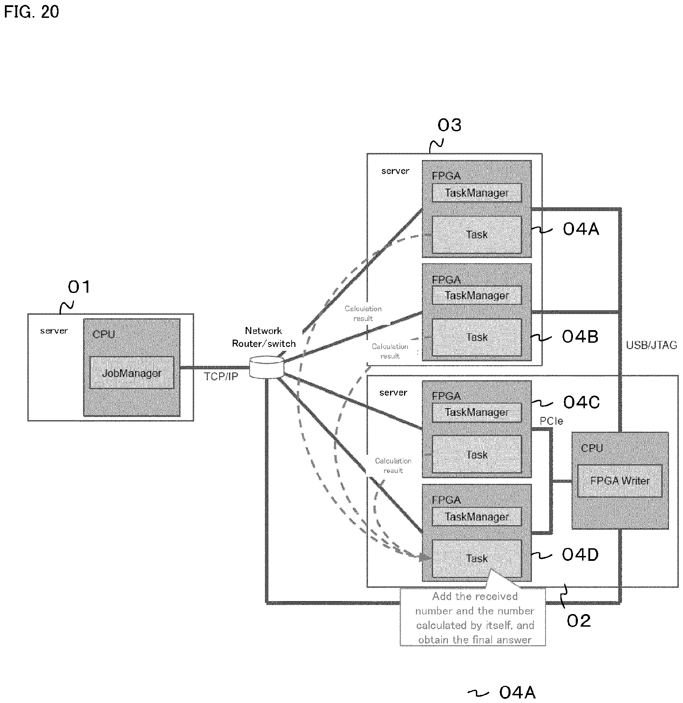

Next, FIG. 20 shows a state in which the results calculated in each FPGA are transmitted to a processing circuit of a task in one FPGA, and the sum thereof is calculated. For example, each result calculated by FPGAs 04A-04C may be transmitted to FPGA04D. In this case, the network position of the FPGA04D may be determined in advance based on data flow analysis by the JOB manager. The location on the network may be included in the bit stream and written to each FPGA, or communicated to each FPGA as input information to the task indicating the destination of the processing result together with the start instruction of each task.

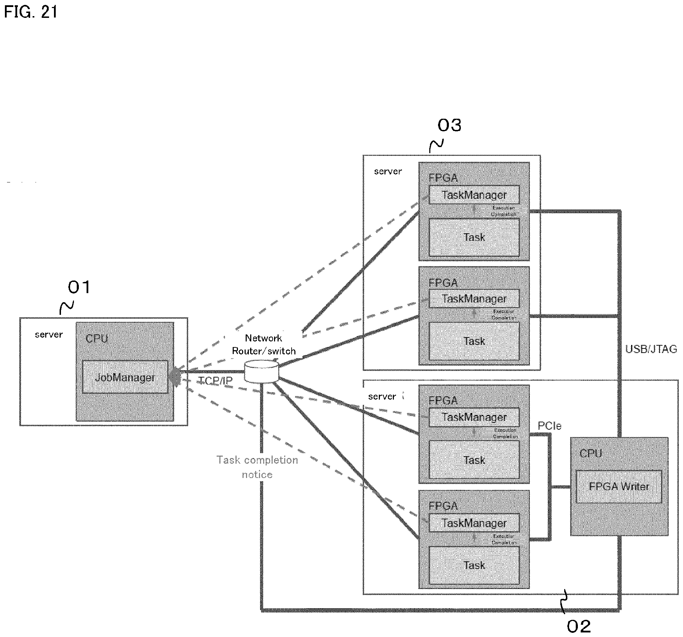

Finally, FIG. 21 shows a state in which each task manager in the FPGA communicates to the JOB manager that execution of each task has finished.

### 4.3. Examples of Other Embodiments

A system of one embodiment may be a distributed processing management system comprising a JOB manager and a resource manager, wherein:
the JOB manager acquires a plurality of JOBs, including one or more JOBs to be executed on the FPGA, and
the resource manager selects a resource corresponding to the JOB, and
the JOB manager assigns the JOB to the resource, wherein
when the JOB is a bit stream JOB executed by writing a bit stream on the FPGA, the resource manager selects a corresponding bit stream corresponding to the PR region to which the bit stream JOB is assigned from a plurality of bit streams related to the bit stream JOB.

Further, in the case where the JOB is a bit stream JOB executed by writing the bit stream on the FPGA,
the resource manager transmits, when a bit stream capable of executing the JOB is written in the FPGA, information corresponding to the written position to the JOB manager, and
transmits, when the bit stream capable of executing the JOB is not written in the FPGA but there is a writable PR region, information including information indicating the writable PR region to the JOB manager, and
transmits, when the bit stream capable of executing the JOB is not written in the FPGA and there is no writable PR region, information including information indicating the writable region to the JOB manager.

### 5 The Fourth System

The fourth system is a technology related to a development tool for developing a bit stream to be written by a user in the first system described above. When a user develops a program to be executed on an FPGA and then writes the program on the FPGA, the program written in a hardware description language or a high-level synthesis language (sometimes referred to as an "HDL program or HLS program" in this document) must be compiled and to be made a bitstream so that it can be written on the FPGA. The bit stream must correspond to the resource information such as the FPGA type and the PR region, and the bit stream that does not correspond to the resource information such as the FPGA type and the PR region cannot be written to the FPGA in the resource information that does not correspond to the FPGA. In this case, it is necessary to compile an HDL program or an HLS program into a bitstream for the FPGA to be written, and some HDL programs or HLS programs may require more than a few hours of compilation time. Therefore, in the first system, when a bit stream corresponding to the secured hardware has not been generated after the user has secured the hardware corresponding to the specific resource information, a time is required to generate the bit stream, and the secured hardware is not used during that time. This results in inefficient use of hardware resources, and in the case where an hourly billing system is adapted, costs are incurred even though the user has not used it. Therefore, the fourth system can improve the efficiency of utilization of hardware resources in response to such problems. As described above, FPGAs will be mainly used in the following description, but they can be similarly implemented in reconfigurable devices instead of FPGAs.

Note that the fourth system may be associated with the fourth system on the premise of the first system described above. On the other hand, the fourth system may be a system in an environment in which the first system is not implemented.

### 5.1. Configuration Examples

The fourth system may be directly or indirectly connected to the hardware information providing device described later and the compilation device described later by a network or the like.

The fourth system may be a system used by the user. The fourth system may be a terminal device used by the user, an information processing device accessed by the terminal used by the user, or a program executed on these devices.

### 5.2. Functional Example

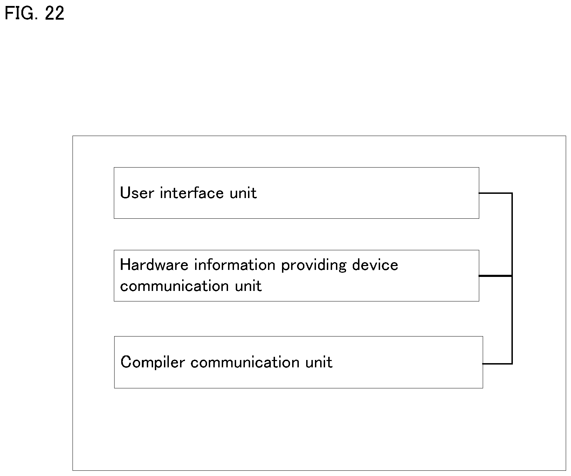

An example system of the fourth system may include a user interface unit, a hardware information providing device communication unit, and/or a compiler communication unit, as shown in FIG. 22.

### 5.2.1. User Interface Unit

The user interface unit may acquire information from the user. For example, an instruction to update information about the flavor may be obtained from the user.

The user interface unit may provide information to the user.

In addition to the instruction from the user, the information on the flavor may be updated according to the predetermined conditions. The prescribed conditions may include, for example, every prescribed period.

### 5.2.2. Hardware Information Providing Device Communication Unit

The hardware information providing device communication unit may have a function that can communicate with a system capable of providing hardware information different from the fourth system. The device (also referred to as "hardware information providing device" in this document) capable of providing hardware information may be the first system described above or may not be the first system described above. The hardware information providing device may have a function capable of providing information specifying the FPGA or the PR region in the FPGA to which the HDL program or the HLS program is written.

The hardware information providing device communication unit may request the hardware information providing device to identify information (also referred to as "hardware identification information" in this document) identifying the FPGA or the PR region in the FPGA in which the HDL program or the HLS program is written, in response to a predetermined condition. Here, the hardware identification information may be resource information identifiied to the extent that the bit stream on which the HDL program or the HLS program is compiled can be written. For example, the hardware information may be resource information that can write the same bit stream even on different hardware, such as resource information that includes information identifying the PR region. This is because resource information that does not include a PR region cannot write the same bit stream if the PR regions are different.

The predetermined condition may include the case where information for updating the flavor is acquired from the user. The predetermined condition may include a case where the predetermined time condition is satisfied. The predetermined time condition may be every predetermined periodic time. The predetermined time condition may be a predetermined date and time.

The hardware information providing device communication unit may have a function of acquiring hardware identification information from the hardware information providing device. The hardware information providing device communication unit may acquire the hardware identification information in response to the above request or may acquire the hardware identification information without making the above request. In the latter case, for example, the hardware information providing device transmits the hardware identification information to the fourth system based on a predetermined condition, and the hardware information providing device communication unit may acquire the hardware identification information in response to the transmission.

The hardware identification information acquired by the hardware information providing device communication unit may be hardware identification information about all of the hardware that the hardware information providing device can provide, or hardware identification information about a part of the hardware that the hardware information providing device can provide. Some of them may be selected based on the hardware information available to the user in the hardware provided by the hardware information providing device. For example, some of the hardware identification information may be selected from the available hardware if the user utilizing the compiled HDL or HLS program is a predetermined member. Such selection may be selected based on predetermined criteria. Such predetermined criteria may be, for example, such that, among the hardware available to the user, the administrator of the first system selects the hardware that the user wants to use.

### 5.2.3. Compiler Communication Unit

The compiler communication unit has a function of communicating with a compiler outside the fourth system. The compiler communication unit may have a function of sending a compilation instruction to the compiler. The compiler communication unit may send information to be used for compilation to the compiler in connection with a compilation instruction. Such information may include, for example, an HDL or HLS program to be compiled and/or hardware identification information to which the compiled bit stream is written.

The compiler communication unit may obtain the compilation result from the compiler after completion of compilation. The compilation result may include a design intermediate file. The design intermediate file may contain information arranged and wired with portions other than the target PR region. For example, if PR region 1 of the first FPGA is included as hardware identification information, the corresponding design intermediate file may include wiring information with a portion in the first FPGA other than PR region 1 of the first FPGA. Note that when the hardware identification information includes a plurality of PR regions, the corresponding design intermediate file may include wiring information with a portion in the FPGA (including each PR region) other than each PR region corresponding to each of the plurality of PR regions. The compilation result may include information in the form of a bit stream. The compiler result may include information in the form of a plurality of partial bit streams.

### 5.3. Example Processing Flow

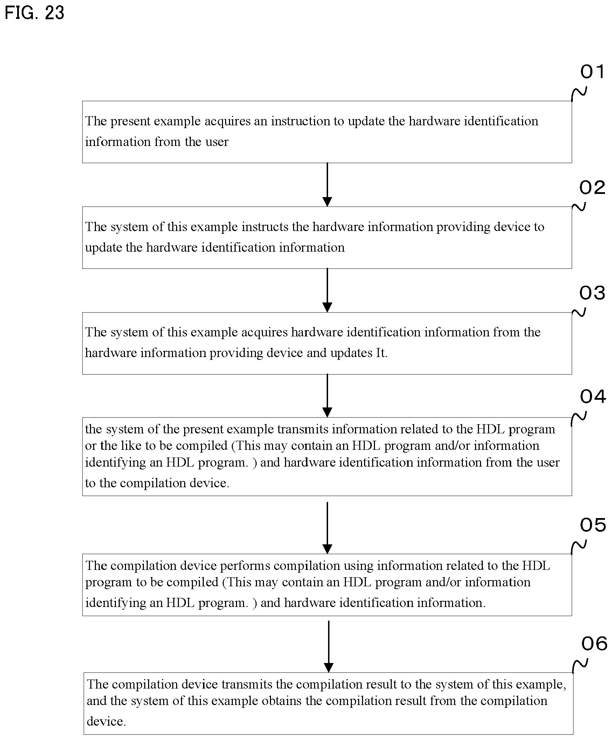

Next, an example processing flow of the system of the present example will be described with reference to FIG. 23. However, the processing of the function of this example is not limited to the flow and various processing can be possible.

First, the fourth system of the present example acquires an instruction to update the hardware identification information from the user (step 1).

Next, the system of this example instructs the hardware information providing device to update the hardware identification information (step 2).

Next, the system of this example acquires hardware identification information from the hardware information providing device and updates it (step 3). For example, the system of this example acquires hardware identification information from the hardware information providing device. Step 3 may be executed without steps 1 and/or 2, in which case steps 1 and 2 may be present or absent.

Next, the system of the present example transmits information related to the HDL program or the like to be compiled (This may contain an HDL or HLS program and/or information identifying an HDL or HLS program. The same shall apply hereinafter.) and hardware identification information from the user to the compilation device (step 4). Here, the hardware identification information may be all the hardware identification information of the system of this example, or may be a part thereof. The more hardware identification information to be compiled, the more writable objects are advantageous. On the other hand, in the case of partial compilation, there is an advantage that the total compilation time is shortened, although the writable object is reduced.

The compilation device performs compilation using information related to the HDL program to be compiled and hardware identification information (step 5). In this case, the compilation device may compile all the hardware identification information or compile using a predetermined range of hardware identification information. The more hardware identification information to be compiled, the more writable objects are advantageous. On the other hand, when it is limited to a predetermined range, there is an advantage of shortening the total compilation time, although there are fewer writable objects.

The compilation device transmits the compilation result to the system of this example, and the system of this example obtains the compilation result from the compilation device (step 6).

Thereafter, the processing may be performed as described in the first system. For example, when the system of this example is connected to the first system, the system of this example may select one or more resource information in the flavor and request the first system to secure the corresponding hardware resources. If the first system succeeds in securing the corresponding hardware resources, the first system may register the hardware resources in a database and transmit the information of the secured hardware resources to the system of this example. The secured hardware resource information may include, for example, information identifying the PR region where the partition shell is written and available. Information identifying such an available PR region may include a network address for the PR region, such as an IP address or MAC address, an ID for the PR region, and/or information identifying the FPGA containing the PR region.

An example system of the fourth system may comprise of
a user interface unit for providing information to and/or acquiring information from a user;
a hardware identification information providing device communication unit having a function capable of communicating with the first system or the hardware identification information providing device; and,
a compiler communication unit having a function capable of communicating with a compiler capable of converting an HDL program or an HLS program into a bit stream writable to an FPGA.

### 6. Various Embodiments

The system according to the first embodiment is described as follows:
A system comprising
an acquisition unit for acquiring information indicating a first resource from a user; and
an identification unit for identifying a first reconfigurable device corresponding to information indicating the first resource; and
an instruction unit for instructing to write the first reconfigurable device to write a first partition shell corresponding to information indicating the first resource on the first reconfigurable device.

The system according to the second embodiment is described in the first embodiment described above as follows:
the acquisition unit acquires information indicating a second resource which is not the same as the information indicating the first resource, and
the instruction unit instructs to write a second partition shell different from the first partition shell, corresponding to information indicating the second resource, on the first reconfigurable device.

The system according to the third embodiment is described in the first embodiment or the second embodiment described above as follows:
further comprising a presentation unit for presenting one or a plurality of resource information to the user,
the information indicating the first resource is a part of the one or a plurality of reconfigurable device resource information presented.

The system according to the fourth embodiment is described in any one of the first to third embodiments described above as follows:
the presentation unit presents a plurality of setting methods about setting the PR region for the first reconfigurable device.

The system according to the fifth embodiment is described in any one of the first to fourth embodiments described above as follows:
the one or a plurality of resource information includes information related to an arithmetic function, information related to a storage function, and/or information related to a communication function.

The system according to the sixth embodiment is described in any one of the first to fifth embodiments described above as follows:
the acquisition unit acquires information indicating the third resource that is not the same as the information indicating the second resource or the second resource, and
the identification unit identifies a third reconfigurable device that is different from the first reconfigurable device, corresponding to information indicating the third resource, and
the instruction unit instructs to write a third partition shell corresponding to the information indicating the third resource on the third reconfigurable device.

The system according to the seventh embodiment is described in any one of the first to sixth embodiments described above as follows:
further comprising a database for associatively storing information at least indicative of the first resource and information indicative of the first reconfigurable device corresponding to the information indicative of the first resource.

The system according to the eighth aspect is described in any one of the first to seventh embodiments described above as follows:
the first reconfigurable device has been written with a hypervisor shell in advance having a function that the first partition shell does not have.

The system according to the ninth embodiment is described in any one of the first to eighth embodiments described above as follows:
the system includes an inquiry unit for inquiring about the status of the first PR region corresponding to the hypervisor shell, and
the hypervisor shell is capable of responding to the inquiry of the status of the first PR region from the inquiry unit.

The system according to the tenth embodiment is described in any one of the first to the ninth embodiments described above as follows:
the hypervisor shell has a function of confirming the qualification about the PR region to which the user writes.

The system according to the eleventh embodiment is described in any one of the first to tenth embodiments described above as follows:
the hypervisor shell has a function of confirming the qualification for a PR region to which a user writes, which may include an initialization function of a storage function and/or a communication function related to the first reconfigurable device.

The method according to the twelfth embodiment is described as follows:
A method performed by a system, comprising
a step for acquiring information indicating a first resource from a user;
a step for identifying a first reconfigurable device corresponding to information indicating the first resource; and
a step for instructing to write a first partition shell corresponding to information indicating the first resource on the first reconfigurable device.

The method according to the thirteenth embodiment is as follows:
the system stores information identifying a first reconfigurable device corresponding to information indicating the first resource;

The computer program according to the fourteenth embodiment is described as follows:
A computer program to operate a system comprising with
means for acquiring information indicating a first resource from a user;
means for identifying a first reconfigurable device corresponding to information indicating the first resource;
means for instructing to write a first partition shell corresponding to information indicating the first resource on the first reconfigurable device.

The computer program according to the fifteenth embodiment is in the fourteenth embodiment as described above as follows:
the system stores information identifying a first reconfigurable device corresponding to information indicating the first resource.

### 7 Configuration Examples for Program-Variable Devices

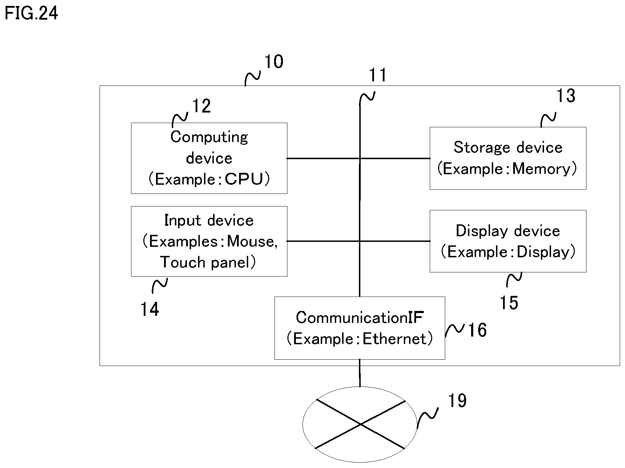

As shown in FIG. 24, the program variable device 10 may include a computing device 12, a storage device 13, a communication IF16, and a bus 11 connecting them. The program variable device 10 may also include an input device 14, a display device 15, and a bus 11 to which they are also connected. The program variable device 10 may be directly or indirectly connected to other information processing devices via the network 19.

The program variable device 10 may be an information processing device such as a server, a cloud, or the like. It may be a dedicated device or a general purpose device. Further, the program variable device 10 itself may be one in which a circuit is written in the reconfigurable device. In this case, there is an advantage that execution of the programs of the various embodiments described above can be carried out more quickly.

Although described above as a configuration implemented by the system of this example, these configurations may be implemented by one or more information processing devices in the system. The system according to the present document may be presented in various ways. For example, the provision may include a display. For example, the system of this example may be displayed by a display device included in the system of this example, or may be displayed by a display device in another information processing device connected directly or indirectly by the system of this example.

It is needless to say that the examples of the invention described in the embodiments of the present document are not limited to those described in the present document, but can be applied to various examples within the scope of the technical concept.

Also, the processes and procedures described herein may be feasible not only by those explicitly described in embodiments, but also by software, hardware, or combinations thereof. The processes and procedures described herein may be implemented as computer programs and executed by various computers. These computer programs may also be stored in a storage medium. These programs may also be stored in a non-transitory or transitory storage medium.

## Claims

1. A system comprising
an acquisition unit for acquiring information indicating a first resource from a user;
an identification unit for identifying a first reconfigurable device corresponding to information indicating the first resource; and
an instruction unit for instructing to write a first partition shell corresponding to information indicating the first resource on the first reconfigurable device.

2. The system according to the claim 1, wherein
the acquisition unit acquires information indicating a second resource which is not the same as the information indicating the first resource, and
the instruction unit instructs to write a second partition shell different from the first partition shell, corresponding to information indicating the second resource, on the first reconfigurable device.

3. The system according to the claim 2,
further comprising a presentation unit for presenting one or a plurality of resource information to the user,
the information indicating the first resource is a part of the one or a plurality of reconfigurable device resource information presented.

4. The system according to the claim 3, wherein
the presentation unit presents a plurality of setting methods about setting the PR region for the first reconfigurable device.

5. The system according to the claim 3, wherein
the one or a plurality of resource information includes information related to an arithmetic function, information related to a storage function, and/or information related to a communication function.

6. The system according to any one of the claims 1 to 6, wherein
the acquisition unit acquires information indicating the third resource that is not the same as the information indicating the second resource or the second resource, and
the identification unit identifies a third reconfigurable device that is different from the first reconfigurable device, corresponding to information indicating the third resource, and
the instruction unit instructs to write a third partition shell corresponding to the information indicating the third resource on the third reconfigurable device.

7. The system according to any one of the claims 1 to 6,
further comprising a database for associatively storing information at least indicative of the first resource and information indicative of the first reconfigurable device corresponding to the information indicative of the first resource

8. The system according to any one of the claims 1 to 7, wherein
the first reconfigurable device has been written with a hypervisor shell in advance having a function that the first partition shell does not have.

9. The system according to the claim 8, wherein the system includes an inquiry unit for inquiring about the status of the first PR region corresponding to the hypervisor shell, and
the hypervisor shell is capable of responding to the inquiry of the status of the first PR region from the inquiry unit.

10. The system according to any one of the claims 8 or 9, wherein the hypervisor shell has a function of confirming the qualification about the PR region to which the user writes.

11. The system according to any one of the claims 8 to 10, wherein
the hypervisor shell has a function of confirming the qualification for a PR region to which a user writes, which may include an initialization function of a storage function and/or a communication function related to the first reconfigurable device.

12. A method performed by a system, comprising
a step for acquiring information indicating a first resource from a user;
a step for identifying a first reconfigurable device corresponding to information indicating the first resource; and
a step for instructing to write a first partition shell corresponding to information indicating the first resource on the first reconfigurable device.

13. The method wherein the system stores information identifying a first reconfigurable device corresponding to information indicating the first resource.

14. A computer program to operate a system comprising with
means for acquiring information indicating a first resource from a user;
means for identifying a first reconfigurable device corresponding to information indicating the first resource;
means for instructing to write a first partition shell corresponding to information indicating the first resource on the first reconfigurable device.

15. The program wherein the system stores information identifying a first reconfigurable device corresponding to information indicating the first resource.
